# EUROPEAN PATENT SPECIFICATION

(11) **EP 3 562 750 B1**
(45) Date of publication and mention of the grant of the patent: **05.04.2023**
(21) Application number: 17886424.5
(22) Date of filing: 27.12.2017
(51) Int. Cl.: B65D 25/14, B05D 7/22, B65D 85/72, C08G 65/38

(54) **PACKAGING COATING RESINS DERIVED FROM REACTIONS OF PHENOLS WITH POLYOLEFINIC TERPENES**
AUS REAKTIONEN VON PHENOLEN MIT POLYOLEFINISCHEN TERPENEN GEWONNENE VERPACKUNGSBESCHICHTUNGSHARZE
EMBALLAGE DE RÉSINES DE REVÊTEMENT DÉRIVÉES DE RÉACTIONS DE PHÉNOLS AVEC DES TERPÈNES POLYOLÉFINIQUES

(30) Priority: 28.12.2016 US 201662439564 P
(43) Date of publication of application: 06.11.2019
(73) Proprietor: SWIMC LLC, Cleveland, OH 44115 (US)
(72) Inventor: ANDRIOT, Matthieu, Minneapolis MN 55440-1461 (US); GIBANEL, Sebastien, Minneapolis MN 55440-1461 (US); PROUVOST, Benoit, Minneapolis MN 55440-1461 (US)
(74) Representative: Novagraaf Group
(86) International application number: PCT/US2017/068490
(87) International publication number: WO 2018/125895

(56) References cited:
- EP-A1- 1 788 048
- WO-A2-2016/100854
- CA-A1- 2 912 536
- CA-A1- 2 942 399
- CA-A1- 2 942 399
- CN-A- 101 555 300
- JP-A- 2007 021 756
- US-A- 2 811 564
- US-A- 2 811 564
- US-A- 3 378 525
- US-A- 6 160 083
- US-A1- 2010 184 877

## Description

### Technical Field

This invention relates to coatings for packaging materials.

### Background

Bisphenol A and bisphenol F have been used to prepare polymers having a variety of properties and uses. For example, bisphenol A or bisphenol F may be reacted i with epichlorohydrin to provide polymers (*e.g.,* polyether polymers) for packaging coatings. There is a desire to reduce or eliminate the use of certain bisphenol A-based and bisphenol F-based compounds in containers and coatings, and especially those involving contact with foods or beverages.
CA 2942399 A1 discloses a polyether polymer for a coating of valves and pipes.
US 2811564 A discloses a preparation of terpene diphenolic compounds.

### Summary

Polyphenols containing two or more hydroxyl-functional phenylene rings separated from one another by, and joined directly or indirectly to, an aliphatic or cycloaliphatic group or groups, may be made by reacting two equivalents of a monophenol with a polyolefinic terpene (*e.g.,* a diolefinic or triolefinic terpene). The terpene-derived aliphatic or cycloaliphatic linking group (*e.g.,* a limonene-derived cycloaliphatic linking group) provides desirable properties in packaging coating compositions, and provides a bridge between the two phenylene groups of the polyphenol, while avoiding or minimizing potential estrogenic activity that might be observed using other linking groups. The resulting polyphenols typically are obtained as a mixture containing mainly isomeric di- or higher-phenols, and in some instances a portion of a cyclic monophenol byproduct. Fewer phenolic isomers, and reduced amounts (and in some instances, no amount) of cyclic monophenol byproduct are obtained when the starting monophenol has one and preferably two substituent groups located ortho to the phenol hydroxyl group. The product polyphenols (*e.g.,* diphenols) may be used to produce epoxy resin prepolymers, for example, by reaction with epichlorohydrin or another epoxide. The prepolymers desirably are in the form of a linear diepoxide analog (*viz.,* a diglycidyl ether or "DOE") with oxirane terminal groups. The product polyphenols may also or instead be combined with a variety of other materials that react with a hydroxyl group on a phenol ring to make a variety of homopolymers and copolymers (*e.g.,* linear homopolymers and copolymers) including polyethers, polyesters, vinyl esters, polyurethanes, polyureas, polycarbonates and phenolic resins. For brevity, such homopolymers and copolymers will sometimes be referred to herein as "polymers". The disclosed prepolymers and polymers may have properties similar to or improved in some desirable respects compared to the properties of previously-reported prepolymers or polymers derived from bisphenol A or bisphenol F. The disclosed prepolymers and polymers may for example have similar or enhanced flexibility, adhesion, resistance to hydrolysis or resistance to solvents. The disclosed prepolymers and polymers may also differ from previously-reported prepolymers or polymers derived from certain conventional bisphenols in other useful or important respects. They may, for example, have reduced estrogenic activity. The disclosed prepolymers and polymers have particular utility in formulating packaging coatings, and especially coatings for food and beverage containers and components thereof.

The present invention thus provides, in one aspect, a food or beverage contact article that has been or will be formed into a food or beverage container or container component, the article comprising a metal substrate having on at least one surface a coating formed from a coating composition comprising a polymer derived from or derivable from a polyphenol having two or more phenylene rings linked to or through an aliphatic or cycloaliphatic group or groups, wherein the polyphenol is a reaction product of a monophenol with a polyolefinic terpene. In some embodiments, the polyphenol is a diphenol and a reaction product of a monophenol with a diolefinic terpene. In some embodiments, the terpene is a cyclic terpene.

The invention provides, in another aspect, a method for making a coated food or beverage container or container component, comprising the steps of
a) applying to at least one surface of a metal substrate a coating composition comprising a polymer derived from or derivable from a polyphenol having two or more phenylene rings linked to or through an aliphatic or cycloaliphatic group or groups, wherein the polyphenol is a reaction product of a monophenol with a polyolefinic terpene, and
b) curing the coating composition to form a hardened coating.

The invention provides, in yet another aspect, a liquid coating composition comprising (i) a polymer derived from or derivable from a polyphenol having two or more phenylene rings linked to or through an aliphatic or cycloaliphatic group or groups, wherein the polyphenol is a reaction product of a monophenol with a polyolefinic terpene; (ii) a liquid carrier; (iii) an optional curing agent; (iv) an optional catalyst; and (v) an optional lubricant, the composition being suitable for contact with foods or beverages when thermally cured on a metal substrate.

The invention provides, in yet another aspect, a polyether polymer derived from or derivable from a polyphenol having two or more phenylene rings linked to or through an aliphatic or cycloaliphatic group or groups, wherein the polyphenol is a reaction product of a monophenol with a polyolefinic terpene, and the polymer has a number average molecular weight (Mn) of at least about 2,000 and a glass transition temperature (Tg) of at least 30 °C. In certain embodiments, the polymer optionally contains at least two oxirane terminal groups, optionally has a polydispersity index of about 2 to about 5, or optionally contains at least 10 wt. % aromatic segments compared to the polymer weight.

### Brief Description of the Drawing

**Fig. 1** is a perspective view of a coated container;
**Fig. 2** is a partial cross-sectional view of the **Fig. 2** coated container;
**Fig. 3** is a schematic view of a coil coating line;
**Fig. 4** is a side view of a beverage end spray coating system;
**Fig. 5** is a perspective view of a can interior spray coating system;
**Fig. 6** illustrates isomers obtained from the reaction of d-limonene and phenol; and
**Fig. 7** illustrates a reduced set of isomers obtained from the reaction of d-limonene and a di-ortho substituted phenol.

Like reference symbols in the various figures of the drawing indicate like elements. The elements in the drawing are not to scale.

### Detailed Description

As used herein, "a," "an," "the," "at least one," and "one or more" are used interchangeably. Thus, for example, a coating composition that comprises "a" copolymer means that the coating composition includes "one or more" copolymers.

The term "bisphenol" refers to a polyhydric polyphenol having two phenylene groups that each include a six-carbon ring and a hydroxyl group attached to a carbon atom of the ring, wherein the rings of the two phenylene groups do not share any atoms in common.

The terms "comprises" and variations thereof do not have a limiting meaning where these terms appear in the description and claims. Methods, substances, groups, moieties, ingredients, components and other items that are said to comprise various steps or elements may also consist essentially of or consist of such steps or elements.

The term "easy open end" refers to a can end (typically an end of a food or beverage can) that includes (i) a frangible opening portion (which for some beverage can ends functions as a drinking spout) and (ii) a riveted portion for attaching a pull tab thereto for purposes of opening the frangible opening portion to access a product housed within a can.

The terms "estrogenic activity" or "estrogenic agonist activity" refer to the ability of a compound to mimic hormone-like activity through interaction with an endogenous estrogen receptor, typically an endogenous human estrogen receptor.

The term "food-contact surface" refers to a surface of an article (*e.g.,* a food or beverage container) that is in contact with, or suitable for contact with, a food or beverage product.

The term "independently" when used in reference to a group, moiety or other element means that such that each instance of such element may be the same or different. For example, if element E appears in two instances and can be independently X or Y, then the first and second instances of element E can be, respectively, X and X, X and Y, Y and X, orY and Y.

The term "mobile" when used with respect to a compound in a coating composition means that the compound can be extracted from the coating composition when a coating (typically ~1 mg/cm²) is exposed to a test medium for some defined set of conditions, depending on the end use. An example of these testing conditions is exposure of the cured coating to HPLC-grade acetonitrile for 24 hours at 25 °C.

The term "on," when used in the context of a coating applied on a surface or substrate, includes both coatings applied directly or indirectly to the surface or substrate. Thus for example, a coating applied to a primer layer overlying a substrate constitutes a coating applied on the substrate.

The term "organic group" means a hydrocarbon group (with optional elements other than carbon and hydrogen, such as oxygen, nitrogen, sulfur, and silicon) that may be further classified as an aliphatic group, cyclic group (*e.g.,* aromatic and cycloaliphatic groups), or combination of aliphatic and cyclic groups (*e.g.,* alkaryl and aralkyl groups). The term "aliphatic group" means a saturated or unsaturated linear or branched hydrocarbon group. This term is used to encompass alkyl, alkenyl, and alkynyl groups, for example. The term "alkyl group" means a saturated linear or branched hydrocarbon group (*e.g.,* an n-propyl isopropyl group). The term "alkenyl group" means an unsaturated, linear or branched hydrocarbon group with one or more carbon-carbon double bonds (*e.g.,* a vinyl group). The term "cyclic group" means a closed ring hydrocarbon group that is classified as an alicyclic group or an aromatic group, both of which can include heteroatoms. The term "alicyclic group" means a cyclic hydrocarbon group having properties resembling those of aliphatic groups. A group that may be the same as or different from other groups may be referred to as being "independently" something. Substitution on the organic groups of the disclosed polyphenols is contemplated. The terms "group" and "moiety" may be used to differentiate between chemical species that allow for substitution or that may be substituted and those that do not allow or may not be so substituted. The term "group" is intended to be a recitation of both the particular moiety, as well as a recitation of the broader class of substituted and unsubstituted structures that includes the moiety. Thus, when the term "group" is used to describe a chemical substituent, the described chemical material includes the unsubstituted group and that group with O, N, Si, or S atoms, for example, in the chain (as in an alkoxy group) as well as carbonyl groups or other conventional substitution. Where the term "moiety" is used to describe a chemical compound or substituent, only an unsubstituted chemical material is intended to be included. For example, the phrase "alkyl group" is intended to include not only pure open chain saturated hydrocarbon alkyl substituents, such as methyl, ethyl, isopropyl, t-butyl, heptyl, dodecyl, octadecyl, amyl, 2-ethylhexyl, and the like, but also alkyl substituents bearing further substituents known in the art, such as hydroxy, alkoxy, alkylsulfonyl, halogen atoms, cyano, nitro, amino, carboxyl, etc. Thus, "alkyl group" includes ether groups, haloalkyls, nitroalkyls, carboxyalkyls, hydroxyalkyls, sulfoalkyls, etc. On the other hand, the phrase "alkyl moiety" is limited to the inclusion of only pure open chain saturated hydrocarbon alkyl substituents, such as methyl, ethyl, isopropyl, t-butyl, heptyl, dodecyl, octadecyl, amyl, 2-ethylhexyl, and the like.

The term "polyphenol" refers to a polyhydric material having two or more phenylene groups that each include a six-carbon ring and a hydroxyl group attached to a carbon atom of the ring, wherein the rings of the phenylene groups do not share any atoms in common. The term "diphenol" refers to a polyphenol in which two phenylene groups each have one hydroxyl group.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

The term "substantially free" when used with respect to a coating composition that may contain a particular mobile compound means that the coating composition contains less than 1,000 parts per million (ppm) of the recited mobile compound. The term "essentially free" when used with respect to a coating composition that may contain a particular mobile compound means that the coating composition contains less than 100 parts per million (ppm) of the recited mobile compound. The term "essentially completely free" when used with respect to a coating composition that may contain a particular mobile compound means that the coating composition contains less than 5 parts per million (ppm) of the recited mobile compound. The term "completely free" when used with respect to a coating composition that may contain a particular mobile compound means that the coating composition contains less than 20 parts per billion (ppb) of the recited mobile compound. If the aforementioned phrases are used without the term "mobile" (*e.g.,* "substantially free of bisphenol A compound") then the disclosed compositions contain less than the aforementioned amount of the compound whether the compound is mobile in the coating or bound to a constituent of the coating.

The recitation of numerical ranges by endpoints includes all numbers subsumed within that range (*e.g.,* 1 to 5 includes 1, 1.5, 2, 2.75, 3, 3.80, 4, 5, etc.).

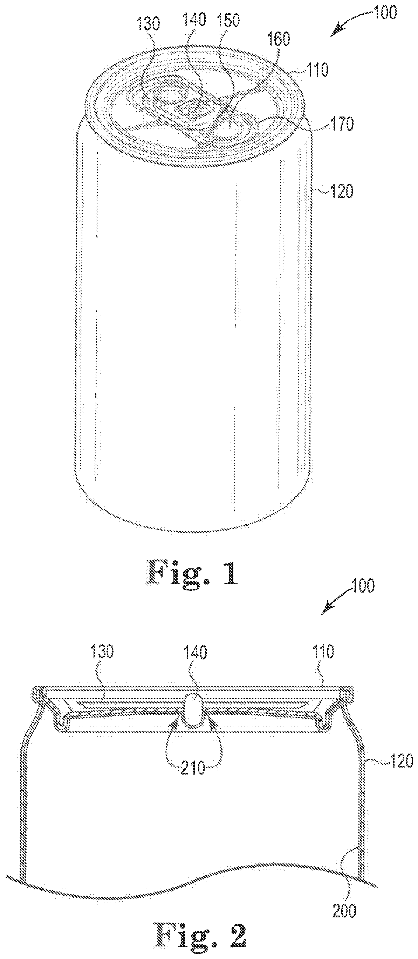

Referring to **Fig. 1****,** coated beverage container **100** is shown in perspective view. Container **100** includes a metal substrate in the form of beverage end **110** fastened (e.g., by crimping) to can **120.** Pull tab **130** is fastened to end **110** by rivet **140.** When pull tab **130** is lifted away from end **110,** neck **150** on pull tab **130** depresses tear strip **160** into container **100,** causing tear strip **160** to separate from end **110** along curved line of weakness **170** and form a partially circular opening in container **100.**

**Fig. 2** shows the upper portion of container **100** in partial cross-section. Coating **200** was applied to the inner surface of end **110** and inner portion of rivet **140** after riveting tab **130** to end **110,** and before attaching end **110** to can **120.** Coating **200** was also applied to the inner wall and bottom of can **120** before attaching end **110** to can **120.** The region **210** where coating **200** covers the intersection between end **110** and rivet **140** represents a particularly challenging portion of coating **200,** and may be prone to blushing, adhesion failure, corrosion or other coating defects.

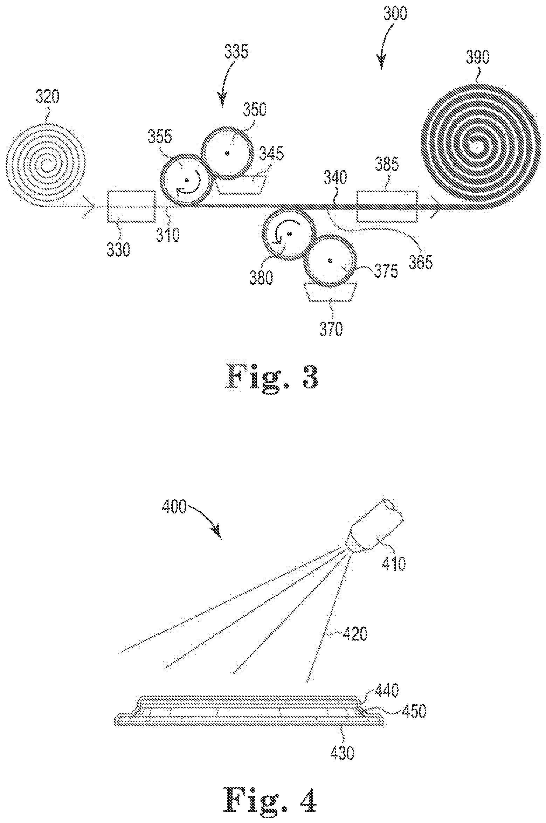

**Fig. 3** shows a schematic view of coil coating line **300.** Metal coil **310** passes from unwind roll **320** through cleaning station **330,** beneath upper reverse roll coating apparatus **335** which dispenses a coating composition **340** from reservoir **345** onto pick up **roll 350,** coating roll **355** and the upper surface of coil **310.** Coil **310** next passes over lower reverse roll coating apparatus **360** which dispenses a coating composition **365** from reservoir **370** onto pick up roll **375,** coating roll **380** and the lower surface of coil **310.** The coated coil passes through oven **385** and onto rewind roll **390.** As discussed in more detail below, other coating techniques including sheet coating and part coating, and other coating application methods including spray coating, curtain coating and dip coating, may also or instead be employed.

**Fig. 4** shows a side view of spray coating system **400.** Spray head **410** applies the disclosed coating composition as a spray **420** directed towards beverage can end **430,** forming coating **440** on interior surface **450** of end **430.**

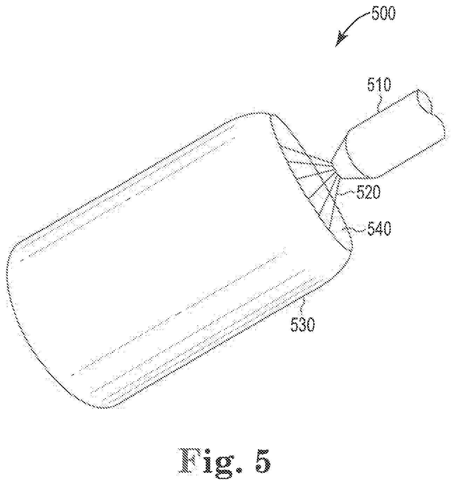

**Fig. 5** shows a perspective view of spray coating system **500.** Spray head **510** applies the disclosed coating composition as a spray **520** directed into the interior of can **530,** forming a coating on interior surface **540** of can **530.**

A variety of metal substrates may be coated with the disclosed compositions. Exemplary substrates include steel (e.g., cold-rolled steel and plated steel) and aluminum. Electro tinplated steel and aluminum represent preferred metal substrates.

A variety of polyolefinic terpenes may be used to make the disclosed polyphenols. The terpene typically will include a cyclic portion (*e.g.,* a six-membered ring) containing zero, one or two sites of olefinic unsaturation, with the remainder of the terpene typically containing two, one or zero sites of olefinic unsaturation located pendant to or remote from (*e.g.,* one carbon away from) the ring. Larger terpenes may contain additional sites of olefinic unsaturation. Exemplary polyolefinic terpenes include monocyclic monoterpenes having the formula C₁₀H₁₆, bicyclic sesquiterpenes having the formula C₁₅H₂₄, enantiomers thereof and mixtures thereof. Polyolefinic terpenes based on larger numbers of isoprene units may be used if desired, but typically will not be preferred due to cost reasons. Exemplary cyclic diolefinic terpenes include limonene (*e.g.,* d-limonene and racemic limonene), phellandrene (*e*.*g*., α*-*phellandrene and β-phellandrene), menthadiene, sylvestrene, terpinene (*e.g.,* α-terpinene, β-terpinene and γ-terpinene), terpinolene and cadinene (*e.g.,* α-cadinene, γ-cadinene and δ-cadinene), the structures for several of which are shown below:

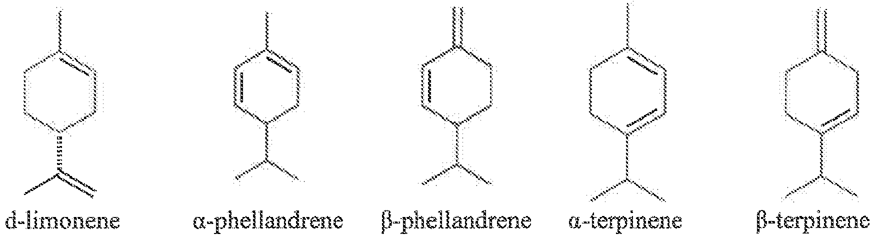

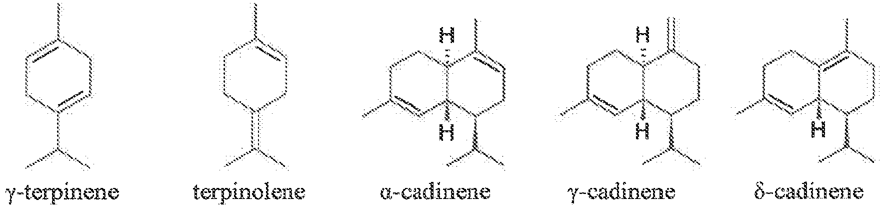

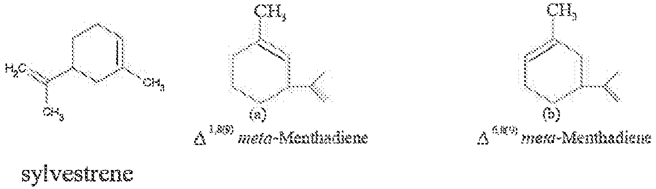

The chosen polyolefinic terpene need not be highly purified, and may in some embodiments of the disclosed method be employed in crude or unrefined form. Biorenewable or bio-based cyclic diolefinic terpenes such as d-limonene, α-terpinene, γ-terpinene, terpinolene and cadinene are preferred, with d-limonene being especially preferred. D-limonene may be obtained, for example, by centrifuge separation or steam distillation of citrus fruits such as lemons and oranges.

A variety of substituted and unsubstituted monophenols may be employed in the disclosed method. Substitution at some, but not all, of the ring positions ortho or para to the phenol hydroxyl group may discourage or reduce the formation of isomeric products, as discussed in more detail below. A substituent or substituents, when present, desirably should not unsuitably deactivate the phenylene ring to electrophilic attack or direct such attack to positions meta rather than ortho or para to the phenol hydroxyl group. Exemplary substituents include small (e.g., C₁ to C₃) alkyl groups including methyl, ethyl, propyl and isopropyl groups. In one exemplary embodiment, the monophenol has a para substituent such as a methyl group (*e.g.,* the monophenol is p-cresol). In another exemplary embodiment, the monophenol has one or two ortho substituents such as a methyl group (*e.g.,* the monophenol is o-cresol or 2,6-xylenol).

The disclosed diphenols are made by reacting appropriate stoichiometric amounts of each reactant, for example about two equivalents of the monophenol with one equivalent of the polyolefinic terpene. A stoichiometric excess of the monophenol may be used if desired. The olefinic double bonds, if protonated, are believed to participate in electrophilic attack at the ortho- and para-positions of the phenol aromatic ring. The reaction may be more generally visualized by considering an alkene having the formula R₁R₂C=CR₃R₄ where each of R₁ through R₄ is hydrogen or an alkyl group attached directly to the depicted olefinic >C=C< site and in which a pair or pairs of alkyl groups can optionally combine to form one or two cycloaliphatic rings. Reactions **I** and **II** shown below illustrate two isomers obtained by reaction of an olefinic carbon atom in such an alkene with the ortho- and para- positions on a phenol aromatic ring:

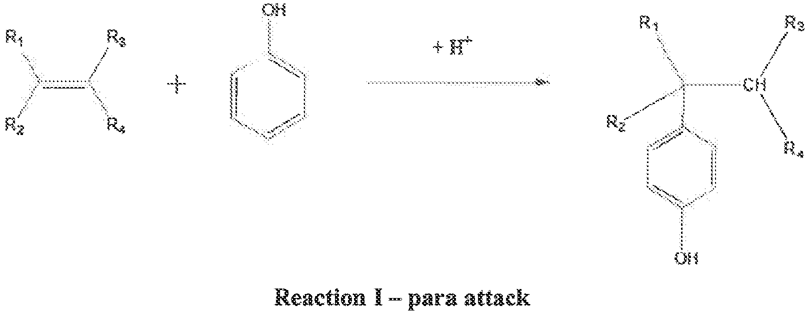

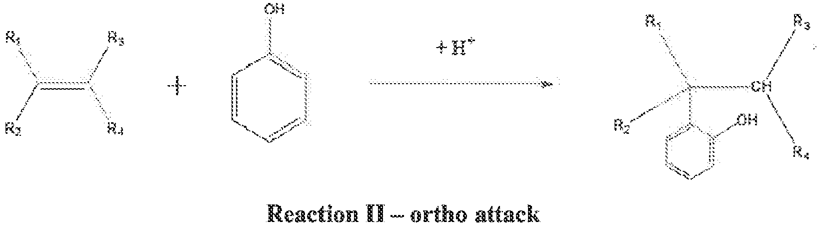

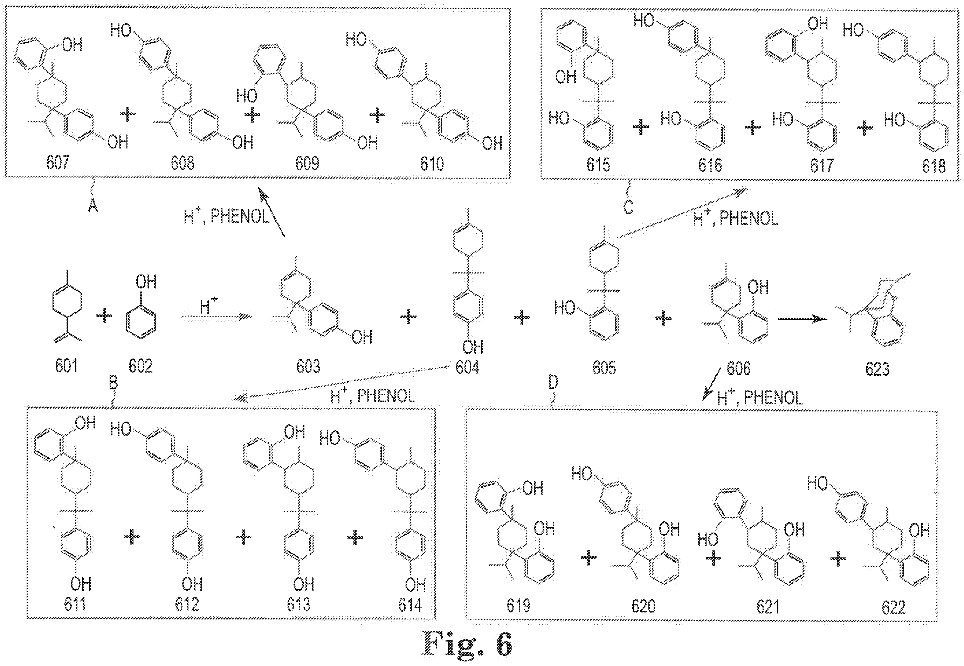

**Fig. 6** illustrates the compounds obtained by reacting d-limonene **601** with two equivalents of phenol **602.** In a first stage, performed under acidic conditions that protonate the olefinic sites in d-limonene **601,** a mixture containing four isomeric monophenols **603, 604, 605** and **606** is produced. In a second stage, performed under acidic conditions that protonate the remaining olefinic site in the residue of d-limonene **601,** and in the presence of additional phenol **602,** fourmixtures **A, B, C** and **D** containing isomeric diphenols **607** through **622** are produced. The reaction of the protonated form of isomer **603** with the additional phenol **602** produces mixture **A** containing isomers **607, 608, 609** and **610.** The reaction of the protonated form of isomer **604** with the additional phenol **602** produces mixture **B** containing isomers **611, 612, 613** and **614.** The reaction of the protonated form of isomer **605** with the additional phenol **602** produces mixture **C** containing isomers **615, 616, 617** and **618.** The reaction of the protonated form of isomer **606** with the additional phenol **602** produces mixture **D** containing isomers **619, 620, 621** and **622.**

Isomer **606** can also undergo rearrangement to produce the bicyclic nonphenolic side-product **623** shown in **Fig. 6****.** This rearrangement represents an undesirable side reaction that diminishes the yield of the desired diphenol isomers **607** through **622.**

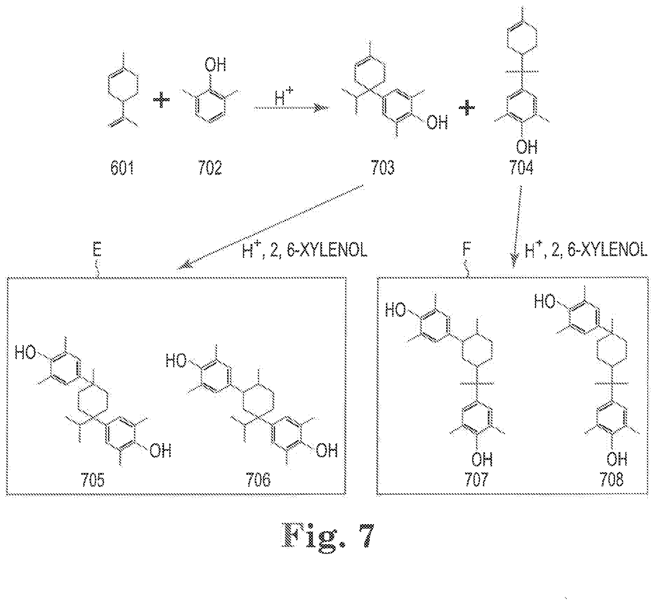

**Fig. 7** illustrates the compounds obtained by reacting d-limonene **601** with the di-ortho-substituted phenol 2,6-xylenol identified as **702** in **Fig. 7****.** In a first stage, performed under acidic conditions that protonate the olefinic sites in d-limonene **601,** a mixture containing two isomeric monophenols **703** and **704** is produced. In a second stage, performed under acidic conditions that protonate the remaining olefinic site in the residue of d-limonene **601,** and in the presence of additional 2,6-xylenol **702,** two mixtures **E** and **F** containing isomeric diphenols **705** through **708** are produced. The reaction of the protonated form of isomer **703** with the additional 2,6-xylenol **702** produces mixture **E** containing isomers **705** and **706.** The reaction of the protonated form of isomer **704** with the additional 2,6-xylenol **702** produces mixture **F** containing isomers **707** and **708.** A rearrangement reaction like that forming nonphenolic side product **623** in **Fig. 6** does not take place due to stearic hindrance caused by the ortho substituents to the phenolic hydroxyl group. Compared to the reaction shown in **Flg.6,** the reaction shown in **Fig. 7** provides a cleaner reaction product containing a greater yield of the desired diphenol isomers, fewer overall isomeric species, and little or no nonphenolic side product.

Reactions to prepare the disclosed polyphenols may be performed using a variety of temperature and pressure conditions and a variety of types of equipment. The chosen conditions may be based on a variety of factors including the chosen starting materials, the desired end use for the product and the available reaction vessel and other equipment. The resulting polyphenols (*e.g.,* diphenols) may, for example, have a number average molecular weight (Mn) of at least about 258, at least about 272 or at least about 284 and up to about 500, up to about 1,000, up to about 1,500 or up to about 2,000 Daltons (Da) as evaluated using gel permeation chromatography and a polystyrene standard.

When the starting materials used to prepare the disclosed polyphenols are each in liquid form at the desired reaction temperature, or can be combined with one another to form a liquid mixture at such reaction temperature, then the reaction may in some embodiments be performed neat, without added solvent(s). If employed, solvent(s) may be added to the reaction vessel before beginning the starting material feed(s), may be added together with the starting material feed(s) or may be added to the reaction vessel as a separate feed. The selection of a particular solvent and its level of addition may be based on a variety of factors including the chosen starting materials, the desired end use for the product and the available reaction vessel and available vacuum stripping or distillation equipment. In general, it is preferred to use as little solvent as possible to reduce separation and recovery requirements and minimize the formation of contaminants or, in some instances, undesired side products. Solvents may, however, permit a lower reaction temperature to be employed (*e.g.,* by acting as a heat sink to prevent run-away reactions and reduce cooling requirements), may reduce stirrer torque, or may provide a less viscous or more plasticized final product. Solvents in which the reactants or the reaction product are insoluble may be employed to facilitate separation or purification of the reaction product. Desirably, the chosen solvent(s) are not unduly reactive with the starting materials or product polyphenol compounds and do not unduly decompose under the chosen reaction conditions. Higher boiling solvents are preferred due to their low vapor pressure at high temperatures, e*.g.,* solvents with a boiling point above 100° C or above 150° C. Exemplary solvents that may be used include aromatic hydrocarbons including toluene (B.P. 110° C), xylene (B.P. 140° C), commercially-available materials such as the "AROMATIC" series fluids (*e.g.,* AROMATIC 150 and AROMATIC 200) from ExxonMobil Corp., the SHELLSOL^{™} series fluids (*e.g.,* SHELLSOL A100 and SHELLSOL A150) from Shell Chemical Co, HYDROSOL A170 (B.P. 140-200° C) from DHC SolventChemie GmbH, and mixtures thereof; petroleum solvents including petroleum naphtha, VM&P naphtha, Stoddard solvent, kerosene (B.P. 150° C) and mixtures thereof; ketones including methyl isobutyl ketone (B.P. 117° C), methyl isoamyl ketone (B.P. 144° C), methyl amyl ketone (B.P. 150° C), cyclohexanone (B.P. 156° C), isobutyl ketone (B.P. 168° C), methyl hexyl ketone (B.P. 173° C), methyl heptyl ketone (B.P. 192° C) and mixtures thereof; the series of glyme and diglyme solvents available from Clariant Corporation; and mixtures thereof. When used, the solvent amount may vary over a wide range, and may for example represent about 5 to about 98 wt. %, about 10 to about 80 wt. %, or about 30 to about 50 wt. % of the reaction mixture. The solvent(s) preferably are dried prior to use in order to avoid the reaction of water with carbocation species in the reaction mixture and consequent cessation or slowing of the desired polyphenol formation reactions and a reduced yield of the desired polyphenol reaction products.

One or more catalysts preferably are employed to assist in converting the starting materials to the disclosed polyphenols. Exemplary catalysts include trifluoroacetic acid, sulfuric acid, sulfonic acid, polymers bearing such acid groups (*e.g.,* AMBERLITE^{™} ion exchange resins, commercially available from Dow Chemical Company), other materials that will be familiar to persons skilled in the art, and mixtures thereof. The catalyst may be heterogeneous (*viz.,* a solid that contacts a reaction mixture which may be in liquid, gas or other fluid form), homogeneous (*viz*., a catalyst that dissolves in the reaction mixture), or a combination thereof. The catalyst may be unsupported or may be supported on a variety of substrates that will be familiar to persons having ordinary skill in the art. The catalyst type and amount may vary based on a variety of factors including, *e.g.,* the chosen starting materials, the desired end use for the product and the chosen reaction vessel. Under batch conditions, the catalyst amount may for example be at least about 0.1, at least about 0.5 or at least about 1 wt. %, and up to about 5, up to about 10 or up to about 20 wt. % catalyst per 100 parts by weight of reactive starting materials.

The reaction temperature may, for example, be maintained below about 100 °C, and more preferably at about 0 °C to about 50 °C. Below these preferred temperatures the reaction may be too slow to be practical for commercial scale production. Above these preferred temperatures, the reaction may become hard to control, selectivity may be reduced, or undesired byproducts may be obtained or obtained in undesired amounts. In a preferred method, the reaction is performed at ambient pressure, below room temperature, and under an inert atmosphere such as nitrogen gas.

The resulting polyphenol compounds may be used as is or purified prior to use. In general, the use of a purification method may depend on factors including the chosen reaction scheme, yield, byproducts and the form (*e.g.,* solid or liquid) in which the product is obtained. Exemplary purification methods will be familiar to persons having ordinary skill in the art and include washing with solvent, solvent extraction, flotation, filtration, centrifugation, evaporation, crystallization, recrystallization, fractionation, electrolysis, sublimation, adsorption, distillation and biological methods including fermentation, microbes, enzymes and combinations thereof. Preferably, the product is be purified by extraction using a solvent for one or more of the starting materials.

The disclosed polyphenol compounds provide useful raw or starting materials for the preparation of a variety of homopolymers and copolymers. For example, a diphenol or mixture of diphenols may be reacted with an epoxide (for example, epichlorohydrin) to form a diepoxide analog (*viz*., a DGE) with oxirane terminal groups. The resulting compounds may then be reacted with any suitable extender bearing two identical or different oxirane-reactive groups (for example hydroxyl groups, hydroxyphenyl groups, acid groups or amine groups) or with combinations of extenders to build molecular weight. Compounds containing hydroxyphenyl groups (for example, dihydric phenols) are preferred extenders which can be reacted with the above-mentioned diepoxides to provide upgraded molecular weight polymers that include one or both of - CH₂-CH(OH)-CH₂- or -CH₂- CH₂-CH(OH)- segments. In some embodiments, the extender is one or more of the disclosed diphenols. Other suitable extenders include hindered diphenols (for example, ortho-substituted diphenols such as 4,4'-methylenebis(2,6-dimethylphenol) as described in U.S. Patent No. 9,409,219 B2 (Niederst et al. '219); unsubstituted diphenols having low estrogenicity (for example, 4,4'-(1,4-phenylenebis(propane-2,2-diyl))diphenol and 2,2'methylenebis(phenol)) as also described in Niederst et al. '219; diphenols such as those described (for example, the bis-4-hydroxybenzoate of cyclohexanedimethanol) in U.S. Patent No. 8,129,495 B2 (Evans et al. `495); di(amido(alkyl)phenol) compounds as described in International Application No. WO 2015/057932 A1 (Gibanel et al.) and the dihydric compounds of Formula E shown below: 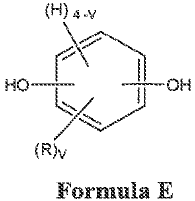 wherein:
each R, if present, is preferably independently an atom or group preferably having at atomic weight of at least 15 Daltons that is preferably substantially nonreactive with an epoxy group;
v is 0 to 4; and
two or more R groups can optionally join to form one or more cyclic groups.

Exemplary dihydric compounds of Formula E include catechol and substituted catechols (*e.g.,* 3-methylcatechol, 4-methylcatechol, 4-tert-butyl catechol, and the like); hydroquinone and substituted hydroquinones (*e.g.,* methylhydroquinone, 2,5-dimethylhydroquinone, trimethylhydroquinone, tetramethylhydroquinone, ethylhydroquinone, 2,5-diethylhydroquinone, triethylhydroquinone, tetraethylhydroquinone, tert-butylhydroquinone, 2,5-di-tert-butylhydroquinone, methoxyhydroquinone and the like); resorcinol and substituted resorcinols (e.g., 2-methylresorcinol, 4-methyl resorcinol, 2,5-dimethylresorcinol, 4-ethylresorcinol, 4-butylresorcinol, 4,6-di-tert-butylresorcinol, 2,4,6-tri-tert-butylresorcinol, and the like); and variants and mixtures thereof. Additional suitable dihydric compounds are disclosed in U.S. Patent Application Publication No. US 2013/0206756 A1 (Niederst et al. `756) and in International Application No. WO 2013/119686 A1 (Niederst et al. '686).

The disclosed polyphenols may also be reacted with diepoxides to provide polymers that include -CH₂-CH(OH)-CH₂- or -CH₂- CH₂-CH(OH)- segments and which have upgraded molecular weights compared to the starting polyphenol compound. Exemplary such diepoxides include those based on bisphenol A, bisphenol F, and preferably those based on any of a variety of non-Bisphenol A ("non-BPA") and non-bisphenol F ("non-BPF") compounds including those described in the above-mentioned Evans et al. '495 and Niederst et al. `219 patents and the Niederst et al. `756 and Niederst et al. `686 applications. By way of example, exemplary non-BPA and non-BPF epoxides include the diglycidyl ethers of diphenols made using the disclosed method; diglycidyl ethers of hindered diphenols (for example, 4,4'-methylenebis(2,6-dimethylphenol diglycidyl ether) as described in Niederst et al. `219; diglycidyl ethers of nonsubstituted diphenols having low estrogenicity (for example, 4,4'-(1,4-phenylenebis(propane-2,2-diyl))diphenol diglycidyl ether and 2,2'methylenebis(phenol) diglycidyl ether) as also described in Niederst et al. '219; diglycidyl ethers of diphenols such as those described (for example, bis-4-hydroxybenzoate of cyclohexanedimethanol diglycidyl ether) in Evans et al. `495; di(amido(alkyl)phenol) diglycidyl ethers as described in Gibanel et al.; diglycidyl ethers of compounds of Formula E shown above (preferably substituted such compounds such as, for example, di-t-butyl hydroquinone); 1,4-cyclohexanedimethanol diglycidyl ether (CHDMDGE); resorcinol diglycidyl ether; neopentyl glycol diglycidyl ether; 2-methyl-1,3-propandiol diglycidyl ether, and diepoxides of cyclic diols such as cyclobutanediol (*e.g.,* the diglycidyl ether of 2,2,4,4-tetramethyl-1,3-cyclobutanediol), tricyclodecane dimethanol (*e.g.,* the diglycidyl ether of tricyclodecane dimethanol), vanillyl alcohol diglycidyl ether, benzenedimethanol diglycidyl ether and mixtures thereof. The resulting polymers may be formulated with various additional ingredients to provide coatings for rigid or flexible packaging, as well as a variety of other uses. Conditions for the epoxy reactions are generally carried out using standard techniques that will be known to persons having ordinary skill in the art. For example, any or all of the diphenols **607** through **622** in **Fig. 6** or the diphenols **703** through **708** in **Fig. 7** may be reacted with a suitable halogenated epoxy such as epichlorohydrin to provide a diglycidylether-terminated linear epoxy resin. The reaction preferably is performed in an alkaline medium. The desired alkalinity is obtained by adding basic substances, such as sodium or potassium hydroxide, preferably in stoichiometric excess to the epichlorohydrin. The reaction is preferably carried out at temperatures of 50 °C to 150 °C. Heating is preferably continued for several hours to effect the reaction and the product is then washed free of salt and base. Procedures for similar reactions are disclosed, for example, in U.S. Pat. No. 2,633,458.

The diglycidylether-terminated linear epoxy resin may be further reacted with an additional polyphenol, such as a diphenol made using the disclosed method or diphenols such as those described in the above-mentioned Evans et al. '495 and Niederst et al. `219 patents, the Niederst et al. '756 and Niederst et al. '686 applications or in Gibanel et al. to provide a polyether having a further upgraded molecular weight. Depending on stoichiometry, the resultant polyether may be epoxy-terminated or phenoxy-terminated, and may have a variety of molecular weights, such as the molecular weights of commercially available BPA-based epoxy materials (*e.g.,* those available under trade designations such as EPON 828, 1001, 1007 and 1009 from Resolution Performance Products, Houston, Texas). Preferred upgraded molecular weight polymers (for example, upgraded molecular weight polyethers) have a number average molecular weight (Mn) of at least about 2,000, more preferably at least about 3,000, and even more preferably at least about 4,000. The upper limit for the molecular weight of the upgraded molecular weight polymer will in general be governed by considerations such as the polymer solubility limit in the chosen coating solvent, and may for example be an Mn value of less than about 20,000, less than about 10,000, less than about 8,000 or less than about 6,000. In one embodiment, the upgraded molecular weight polymers will have Mn values that are the same as or similar to the Mn values of commercially available BPA-based epoxy materials (*e.g.,* those available under trade designations such as EPON 828,1001, 1007 and 1009 from Resolution Performance Products, Houston, Texas), as doing so may simplify product reformulation and removal of BPA materials. In some embodiments, the upgraded molecular weight polymer will have a polydispersity index of about 2 to about 5.

The upgraded molecular weight polymer will typically have a Tg of at least 30 °C., and preferably a Tg of at least 60 °C., at least 70 °C., or at least 80 °C. The Tg may for example also be less than 150 °C., less than 130 °C., or less than 110 °C. While not intending to be bound by any theory, it is believed that selection of a suitable Tg value may be especially important in applications where the coating composition will be in contact with food or beverage products during retort processing at high temperature (e.g., at temperatures at or above about 100 °C. and sometimes accompanied by pressures in excess of atmospheric pressure), particularly when retorting products that are more chemically aggressive in nature such as acidic foods or beverages.

The upgraded molecular weight polymer preferably will include at least about 10 wt. % terpene-derived (e.g., limonene-derived) segments or subunits based on the polymer weight of present in the polymer. In some embodiments, the upgraded molecular weight polymer will include at least about 25 wt. %, at least about 40 wt. %, or at least about 50% wt. % terpene-derived segments or subunits. These weight percentages are based on the amount of terpene-derived polyphenol or epoxides thereof relative to the total amount of reactants used to make the upgraded molecular weight polymer.

In some embodiments, the upgraded molecular weight polymer will contain an aromatic content that improves or optimizes one or more desired performance characteristics (such as adhesion to a substrate, or chemical resistance) of a coating composition containing the polymer. Exemplary aromaticity levels may, for example, be at least 10 wt. %, at least 20 wt. % or at least 40 wt. % aromatic segments or subunits. These weight percentages are based on the amount of aromatic group-containing monomer relative to the total amount of reactants used to make the upgraded molecular weight polymer.

If desired, one or more comonomers containing a reactive group or groups that react with, *e.g.,* oxirane groups (for example, -NH₂ groups, hydroxyl phenol groups, acid groups, thio groups or other groups that will be familiar to persons having ordinary skill in the art) may also be included with the reactants used to generate the disclosed polymers. Suitable comonomers include oligomers prepared from a few (e.g., 2 to 8) monomeric units. Non-limiting examples of such comonomers include ethylene diamine, xylylene diamine, adipic acid, azelaic acid, terephthalic acid, isophthalic acid, and combinations thereof. The comonomer(s) may for example be included in an initial reaction mixture of polyepoxide and extender (*e.g.,* polyhydric phenol) or may be post-reacted with the resulting polyether oligomer or polymer. In presently preferred embodiments, a comonomer is not utilized to produce the disclosed polymers.

Molecular weight advancement may be enhanced by the use of a suitable catalyst in an amount sufficient to facilitate the desired reaction. For example, in the condensation reaction of a diepoxide with a diphenol, exemplary catalysts include amines, hydroxides (*e.g.,* potassium hydroxide), phosphonium salts, and the like. A presently preferred catalyst is a phosphonium catalyst.

The disclosed epoxy-terminated polymers may be reacted with a variety of other reactive materials to form desirable products. For example, the epoxy-terminated polymers may be reacted with fatty acids to form polymers having unsaturated (*e.g.,* air oxidizable) reactive groups, or with acrylic acid or methacrylic acid to form free radically curable polymers. The epoxy-terminated polymers may also be reacted with a suitable diacid (such as adipic acid) to further advance the polymer molecular weight.

The disclosed polyphenol compounds, and the disclosed upgraded molecular weight phenoxy-terminated compounds, may also be reacted with a variety of other reactive materials to form desirable products. For example, they may be reacted with cyclic carbonates such as ethylene carbonate or propylene carbonate to produce polyols. The polyols may if desired be further reacted with a suitable polyacid (for example isophthalic acid) and if need be additional polyol (for example, ethylene glycol) to make polyesters. Exemplary polyacid and polyol reactants and reaction conditions will be familiar to persons having ordinary skill in the art, and include materials and conditions such as those described in U.S. Patent Nos. 6,974,631 B2 (Hayes et al.) and 7,381,472 B2 (Brandenburger et al.) and in published International Application No. WO 2010/075395 A2 (Martinoni et al.). The polyols may also be reacted with isocyanates to produce polyurethanes. Exemplary isocyanates and reaction conditions will also be familiar to persons having ordinary skill in the art.

The disclosed polyphenol compounds, and the disclosed upgraded molecular weight phenoxy-terminated compounds, may also be reacted with phosgene to provide polycarbonates. Exemplary reaction conditions will for making such polycarbonates are described in International Application No. PCT/US2013/032262 (Niederst et al.), and will also be familiar to persons having ordinary skill in the art.

The disclosed polyphenol compounds, and the disclosed upgraded molecular weight phenoxy-terminated compounds, may also be reacted with a variety of aldehydes (for example, formaldehyde) in a condensation reaction to provide phenolic resins. Exemplary aldehydes and reaction conditions will be familiar to persons having ordinary skill in the art, and include materials and conditions such as those described in U.S. Patent Application Publication No. US 2011/0315591 A1 (Lespinasse et al.).

The disclosed upgraded molecular weight polymers may be applied to a variety of substrates as liquid or powder-based coating compositions. Liquid coating compositions (typically including the polymer and a liquid carrier) may be preferred for many and uses, especially for use on heat-sensitive substrates or for substrates where an especially thin coating is desired. Exemplary liquid carriers include water, organic solvents, and mixtures of liquid carriers. Exemplary organic solvents include glycol ethers, alcohols, aromatic or aliphatic hydrocarbons, dibasic esters, ketones, esters, and the like. Preferably, such carriers are selected to provide a dispersion or solution of the polymer with which additional additives may be combined to provide a final coating formulation.

In one embodiment, the disclosed liquid coating compositions are solvent-based systems that include no more than a *de minimus* amount of water (*e.g.,* less than 2 wt. % of water). The disclosed solvent-based liquid coating compositions may for example contain at least 20 wt. % non-volatile components *(*viz., "solids"), and more preferably at least 25 wt. % non-volatile components. The disclosed solvent-based liquid coating compositions may also for example contain no greater than 50 wt. % non-volatile components, and more preferably no greater than 40 wt. % non-volatile components. For such an organic solvent-based composition, the non-volatile film-forming components preferably include at least 50 wt. % of the disclosed upgraded molecular weight polymer, more preferably at least 55 wt. % of the polymer, and even more preferably at least 60 wt. % of the polymer. For such an organic solvent-based composition, the non-volatile film-forming components preferably include no greater than 95 wt. % of the disclosed upgraded molecular weight polymer, and more preferably no greater than 85 wt. % of the polymer.

Water-based systems may be made for example as described in U.S. Patent Nos. 3,943,187, 4,076,676, 4,212,781, 4,247,439, 4,285,847, 4,413,015, 4,446,258, 4,517,322, 4,963,602, 5,296,525, 5,527,844, 5,830,952, 5,922,817, 7,189,787 and 8,092,876 and in U.S. Patent Application Publication No. US 2005/0196629 A1. Water-based coating systems may optionally include one or more organic solvents, which will typically be selected to be miscible in water. The liquid carrier system of a water-based coating composition will typically include at least 50 wt. % water, more typically at least 75 wt. % water, and in some embodiments more than 90 wt. % or more than 95 wt. % water. Any suitable technique may be used to render the disclosed polymers miscible in water. For example, the polymer may include a suitable amount of salt groups such as ionic or cationic salt groups (or groups capable of forming such salt groups) to render the polymer miscible in water. Neutralized acid or base groups are preferred salt groups. For example, a water-dispersible polymer may be formed by combining an epoxy-terminated polymer and an acid-functional polymer in the presence of an amine or other suitable base (more preferably a tertiary amine). If desired, the acid-functional polymer may be combined with an amine (for example a tertiary amine) to at least partially neutralize the polymer prior to reaction with the epoxy-terminated polymer. In another embodiment, a water-dispersible polymer may be formed by first reacting an epoxy-terminated polymer with an ethylenically-unsaturated acidic monomer to form a vinyl ester polymer, followed by grafting a mixture of acrylic or vinyl monomers containing acid groups on to the vinyl ester polymer and then neutralizing the vinyl ester polymer using, for example, an amine or other suitable base (more preferably a tertiary amine). If desired, an anhydride may be used in place of the acidic monomer. This will also provide acid functionality which, when combined with an amine to at least partially neutralize the acid functionality, will make the product water-dispersible. The disclosed water-based compositions may for example contain at least 15 wt. % non-volatile components. The disclosed water-based compositions may also for example contain no greater than 50 wt. % non-volatile components, and more preferably no greater than 40 wt. % non-volatile components. For such a water-based composition, the non-volatile film-forming components preferably include at least 5 wt. % of the disclosed upgraded molecular weight polymer, more preferably at least 25 wt % of the polymer, even more preferably at least 30 wt. % of the polymer, and optimally at least 40 wt. % of the polymer. For such a water-based composition, the non-volatile film forming components preferably include no greater than 85 wt. % of the disclosed upgraded molecular weight polymer, and more preferably no greater than 70 wt. % of the polymer.

Preferred coating compositions are substantially free of mobile or bound BPA and mobile or bound bisphenol A diglycidyl ether (BADGE). More preferably, the disclosed coating compositions are essentially free of these compounds, and most preferably they are completely free of these compounds.

When the disclosed coating compositions include polymers having suitable reactive groups (for example, epoxy groups, phenoxy groups or ethylenically unsaturated groups), the coating composition preferably also is formulated using one or more optional curing agents (for example, crosslinking resins, sometimes referred to as "crosslinkers"). The choice of a particular crosslinker typically depends on the particular product being formulated. For example, some coating compositions are highly colored (e.g., gold-colored coatings). These coatings may typically be formulated using crosslinkers that themselves tend to have a yellowish color. In contrast, white coatings are generally formulated using non-yellow or non-yellowing crosslinkers, or only a small amount of a yellow or yellowing crosslinker.

Preferred curing agents are substantially free of mobile or bound BPA and mobile or bound BADGE, and more preferably are completely free of mobile or bound BPA and mobile or bound BADGE. Suitable examples of such curing agents for use with phenoxy group-containing polymers include hydroxyl-reactive curing resins such as phenoplasts, aminoplast, blocked or unblocked isocyanates, acidic oligomers, polyamines, polyaminoamides, and mixtures thereof.

Exemplary phenoplast resins include the condensation products of aldehydes with phenols. Formaldehyde and acetaldehyde are preferred aldehydes. Various phenols can be employed including phenol, cresol, p-phenylphenol, p-tert-butylphenol, p-tert-amylphenol and cyclopentylphenol.

Exemplary aminoplast resins are the condensation products of aldehydes such as formaldehyde, acetaldehyde, crotonaldehyde, and benzaldehyde with amino- or amido-group-containing substances such as urea, melamine, and benzoguanamine. Examples of suitable aminoplast crosslinking resins include, without limitation, benzoguanamine-formaldehyde resins, melamine-formaldehyde resins, etherified melamine-formaldehyde, and urea-formaldehyde resins.

Exemplary other generally suitable curing agents include blocked or non-blocked aliphatic, cycloaliphatic or aromatic di-, tri-, or polyvalent isocyanates, such as hexamethylene diisocyanate, cyclohexyl-1,4-diisocyanate, and the like. Further non-limiting examples of generally suitable blocked isocyanates include isomers of isophorone diisocyanate, dicyclohexylmethane diisocyanate, toluene diisocyanate, diphenylmethane diisocyanate, phenylene diisocyanate, tetramethyl xylene diisocyanate, xylylene diisocyanate, and mixtures thereof. In some embodiments, blocked isocyanates having an Mn of at least about 300, more preferably at least about 650, and even more preferably at least about 1,000 may be used. Polymeric blocked isocyanates are useful in certain embodiments. Exemplary polymeric blocked isocyanates include a biuret or isocyanurate of a diisocyanate, a trifunctional "trimer", or a mixture thereof. Commercially available blocked polymeric isocyanates include TRIXENE^{™} BI 7951, TRIXENE BI 7984, TRIXENE BI 7963, TRIXENE BI 7981 (available from Baxenden Chemicals, Ltd., Accrington, Lancashire, England); DESMODUR^{™} BL 3175A, DESMODUR BL3272, DESMODUR BL3370, DESMODUR BL 3475, DESMODUR BL 4265, DESMODUR PL 340, DESMODUR VP LS 2078, DESMODUR VP LS 2117, and DESMODUR VP LS 2352 (available from Bayer Corp., Pittsburgh, PA, USA); and combinations thereof. Exemplary trimers include a trimerization product prepared from on average three diisocyanate molecules or a trimer prepared from on average three moles of diisocyanate (*e.g.,* HMDI) reacted with one mole of another compound such as, for example, a triol (*e.g.,* trimethylolpropane).

The level of curing agent (*viz.,* crosslinker) used will typically depend on the type of curing agent, the time and temperature of the bake, and the molecular weight of the binder polymer. If used, the crosslinker is typically present in an amount of up to 50 wt. %, preferably up to 30 wt. %, and more preferably up to 15 wt. % based on the total weight of the resin solids in the coating composition. If used, a crosslinker is preferably present in an amount of at least 0.1 wt. %, more preferably at least 1 wt. %, and even more preferably at least 1.5 wt. % based upon the total resin solids weight.

The disclosed upgraded molecular weight polymers may serve as a binder polymer in the disclosed coating compositions. The binder polymer amount may vary widely depending on a variety of considerations including the method of application, the presence of other film-forming materials, whether the coating composition is a water-based or solvent-based system, and so on. For liquid-based coating compositions, the binder polymer will typically constitute at least 10 wt. %, more typically at least 30 wt. %, and even more typically at least 50 wt. % of the coating composition, based on the total weight of resin solids in the coating composition. For such liquid-based coating compositions, the binder polymer will typically constitute less than about 90 wt. %, more typically less than about 85 wt. %, and even more typically less than about 75 wt. % of the coating composition, based on the total weight of resin solids in the coating composition.

The disclosed coating compositions may also include other optional polymers that do not adversely affect the coating composition or a cured coating thereof. Such optional polymers are typically included as a nonreactive filler material, although they may be included as a reactive crosslinker, or to provide other desired properties. Such optional nonreactive filler polymers include, for example, polyesters, acrylics, polyamides, polyethers, and novalacs. Alternatively, such additional polymeric materials or monomers may be reactive with other components of the composition (e.g., an acid-functional or unsaturated polymer). If desired, reactive polymers may be incorporated into the disclosed compositions, for example to provide additional functionality for various purposes, including crosslinking or to assist in dispersing the disclosed upgraded molecular weight polymers into water. Examples of such reactive polymers include, for example, functionalized polyesters, acrylics, polyamides, and polyethers. Preferred optional polymers are substantially free of mobile BPA and mobile BADGE, and more preferably completely free of such compounds.

Another preferred optional ingredient is a catalyst to increase the rate of cure. Examples of catalysts, include, but are not limited to, strong acids including phosphoric acid, dodecylbenzene sulfonic acid (DDBSA, available as CYCAT 600 from Cytec), methane sulfonic acid (MSA), p-toluene sulfonic acid (pTSA), dinonylnaphthalene disulfonic acid (DNNDSA), and triflic acid; quaternary ammonium compounds; phosphorous compounds; and tin, titanium, and zinc compounds. Specific examples include, but are not limited to, a tetraalkyl ammonium halide, a tetraalkyl or tetraaryl phosphonium iodide or acetate, tin octoate, zinc octoate, triphenylphosphine, and similar catalysts known to persons having ordinary skill in the art. If used, a catalyst is preferably present in an amount of at least 0.01 wt. %, and more preferably at least 0.1 wt. %, based on the weight of nonvolatile material in the coating composition. If used, a catalyst is preferably present in an amount of no greater than 3 wt. %, and more preferably no greater than 1 wt. %, based on the weight of nonvolatile material in the coating composition.

Another useful optional ingredient is a lubricant (*e.g.,* a wax), which facilitates manufacture of fabricated metal articles (*e.g.,* container closures and food or beverage can ends) by imparting lubricity to sheets of coated metal substrate. Non-limiting examples of suitable lubricants include, for example, natural waxes such as Carnauba wax or lanolin wax, polytetrafluoroethane (PTFE) and polyethylene-type lubricants. If used, a lubricant is preferably present in the coating composition in an amount of at least 0.1 wt. %, and preferably no greater than 2 wt. %, and more preferably no greater than 1 wt %, based on the total weight of nonvolatile material in the coating composition.

Another useful optional ingredient is a pigment, such as titanium dioxide. If used, a pigment is present in the disclosed coating composition in an amount of no greater than 70 wt. %, more preferably no greater than 50 wt. %, and even more preferably no greater than 40 wt. %, based on the total weight of solids in the coating composition.

Surfactants may optionally be added to the disclosed coating composition to aid in flow and wetting of a substrate. Examples of surfactants include, but are not limited to, nonylphenol polyethers and salts and similar surfactants known to persons having ordinary skill in the art. If used, a surfactant is preferably present in an amount of at least 0.01 wt. %, and more preferably at least 0.1 wt. %, based on the weight of resin solids. If used, a surfactant is preferably present in an amount no greater than 10 wt. %, and more preferably no greater than 5 wt. %, based on the weight of resin solids.

The disclosed coating compositions may also include other optional ingredients that do not adversely affect the coating composition or cured coating thereof. Such optional ingredients are typically included in a coating composition to enhance composition esthetics; to facilitate manufacturing, processing, handling, or application of the composition; or to further improve a particular functional property of a coating composition or a cured coating thereof. For example, the disclosed coating compositions may optionally include fillers other than those already mentioned, dyes, colorants, toners, coalescents, extenders, anticorrosion agents, flow control agents, thixotropic agents, dispersing agents, antioxidants, oxygen-scavenging materials, adhesion promoters, light stabilizers, and mixtures thereof, as required to provide desired film properties. Each optional ingredient is preferably included in a sufficient amount to serve its intended purpose, but not in such an amount to adversely affect a coating composition or a cured coating thereof. The disclosed coating compositions preferably also provide thermoset coatings, and if need be include crosslinkers or other ingredients that impart to or enable thermoset properties in the coating composition.

The disclosed coating compositions may be present as a layer of a mono-layer coating system or as one or more layers of a multi-layer coating system. The coating composition can be used as a primer coat, an intermediate coat, a top coat, or a combination thereof. The coating thickness of a particular layer and of the overall coating system will vary depending upon the coating material used, the substrate, the coating application method, and the end use for the coated article. Mono-layer or multi-layer coating systems including one or more layers formed from the disclosed coating composition may have any suitable overall coating thickness, but will typically have an overall average dry coating thickness of from about 2 to about 60 micrometers and more typically from about 3 to about 12 micrometers.

The disclosed coating compositions may be applied to a substrate either prior to, or after, the substrate is formed into an article such as, for example, a food or beverage container or a portion thereof. In one embodiment, a method of forming food or beverage cans is provided that includes: applying a coating composition described herein to a metal substrate (*e.g.,* applying the composition to the metal substrate in the form of a planar coil or sheet), hardening the composition, and forming (*e.g.,* via stamping or drawing) the substrate into a packaging container or a portion thereof (*e.g.,* a food or beverage can or a portion thereof). For example, two-piece or three-piece cans or portions thereof such as riveted beverage can ends with a cured coating of the disclosed coating composition on a surface thereof can be formed in such a method. In another embodiment, a method of forming food or beverage cans is provided that includes: forming (*e.g.,* via stamping) a metal substrate into a packaging container or a portion thereof (*e.g*., a food or beverage can or a portion thereof, applying a coating composition described herein to the inside (*e.g.,* via spraying), outside or both inside and outside portions of such packaging container or a portion thereof, and hardening the composition. The disclosed upgraded molecular weight polymers are especially desirable for use on the inside or interior portion of such food or beverage containers, and for other applications involving a food or beverage contact surface or involving a metal substrate. Exemplary such applications include two-piece drawn food cans, three-piece food cans, food can ends, drawn and ironed food or beverage cans, beverage can ends, easy open can ends, twist-off closure lids, and the like. Thus in a preferred embodiment, the coating composition forms a continuous interior can coating.

After applying the coating composition onto a substrate, the composition can be cured using a variety of processes, including, for example, oven baking by either conventional or convectional methods, or any other method that provides an elevated temperature suitable for curing the coating. The curing process may be performed in either discrete or combined steps. For example, substrates can be dried at ambient temperature to leave the coating compositions in a largely uncrosslinked state. The coated substrates can then be heated to fully cure the compositions. In certain instances, the disclosed coating compositions may be dried and cured in one step.

The cure conditions will vary depending upon the method of application and the intended end use. The curing process may be performed at any suitable temperature, including, for example, oven temperatures in the range of from about 100 °C to about 300 °C, and more typically from about 177° C to about 250° C. If a metal coil is the substrate to be coated, curing of the applied coating composition may be conducted, for example, by heating the coated metal substrate over a suitable time period to a peak metal temperature ("PMT") of preferably greater than about 177 °C. More preferably, the coated metal coil is heated for a suitable time period (e.g., about 5 to 900 seconds) to a PMT of at least about 218 °C.

Coatings and upgraded molecular weight polymers like those described herein may be evaluated using a variety of tests including:

### Differential Scanning Calorimetry

Samples for differential scanning calorimetry ("DSC") testing were prepared by first applying the liquid resin composition onto aluminum sheet panels. The panels were then baked in a Fisher ISOTEMP^{™} electric oven for 20 minutes at 149 °C (300 °F) to remove volatile materials. After cooling to room temperature, the samples were scraped from the panels, weighed into standard sample pans and analyzed using the standard DSC heat-cool-heat method. The samples were equilibrated at -60 °C, then heated at 20 °C per minute to 200 °C, cooled to -60 °C, and then heated again at 20 °C per minute to 200 °C. Glass transitions were calculated from the thermogram of the last heat cycle. The glass transition was measured at the inflection point of the transition.

### Solvent Resistance

The extent of "cure" or crosslinking of a coating may be measured as a resistance to solvents, such as methyl ethyl ketone (MEK) or isopropyl alcohol (IPA). This test is performed as described in ASTM D5402-93. The number of double-rubs (i.e., one back-and forth motion) is reported.

### Global Extractions

The global extraction test is designed to estimate the total amount of mobile material that can potentially migrate out of a coating and into food packed in a coated can. Typically, a coated substrate is subjected to water or solvent blends under a variety of conditions to simulate a given end use. Acceptable extraction conditions and media can be found in 21 CFR section 175.300, paragraphs (d) and (e). The current allowable global extraction limit as defined by this FDA regulation is 50 parts per million (ppm). Extraction may be evaluated using the procedure described in 21 CFR section 175.300, paragraph (e) (4) (xv) but with the following modifications to ensure worst-case scenario performance: 1) the alcohol content is increased to 10% by weight and 2) the filled containers are held for a 10-day equilibrium period at 37.8 °C. These modifications are per the FDA publication "Guidelines for Industry" for preparation of Food Contact Notifications. The coated beverage can is filled with 10 wt. % aqueous ethanol and subjected to pasteurization conditions (65.6 °C) for 2 hours, followed by a 10-day equilibrium period at 37.8 °C. Determination of the amount of extractives is determined as described in 21 CFR section 175.300, paragraph (e) (5), and ppm values are calculated based on surface area of the can (no end) of 283.9 cm² with a volume of 355 milliliters (ml). Preferred coatings give global extraction results of less than 50 ppm, more preferred results of less than 10 ppm, and even more preferred results of less than 1 ppm. Most preferably, the global extraction results are optimally non-detectable.

### Adhesion

Adhesion testing may be performed to assess whether the coating adheres to the coated substrate. The adhesion test is performed according to ASTM D3359, Test Method B, using SCOTCH^{™} 610 tape (available from 3M Company of Saint Paul, Minnesota). Adhesion is generally rated on a scale of 0-10 where a rating of "10" indicates no adhesion failure, a rating of "9" indicates 90% of the coating remains adhered, a rating of "8" indicates 80% of the coating remains adhered, and so on. Adhesion ratings of 10 are typically desired for commercially viable coatings.

### Blush Resistance

Blush resistance measures the ability of a coating to resist attack by various solutions. Typically, blush is measured by the amount of water absorbed into a coated film. When the film absorbs water, it generally becomes cloudy or looks white. Blush is generally measured visually using a scale of 0-10 where a rating of "10" indicates no blush and a rating of "0" indicates complete whitening of the film. Blush ratings of at least 7 are typically desired for commercially viable coatings and optimally 9 or above.

### Process or Retort Resistance

This is a measure of the coating integrity of the coated substrate after exposure to heat and pressure with a liquid such as water. Retort performance is not necessarily required for all food and beverage coatings, but is desirable for some product types that are packed under retort conditions. Testing is accomplished by subjecting the coated substrate to heat ranging from 105 °C to 130 °C and pressure ranging from 0.7 kg/cm² to 1.05 kg/cm² for a period of 15 minutes to 90 minutes. For the present evaluation, the coated substrate may be immersed in deionized water and subjected to heat of 121 °C and pressure of 1.05 kg/cm² for a period of 90 minutes. The coated substrate may then be tested for adhesion and blush as described above. In food or beverage applications requiring retort performance, adhesion ratings of 10 and blush ratings of at least 7 are typically desired for commercially viable coatings.

### Wedge Bend Test

Coating flexibility may be evaluated using an ERICHSEN^{™} Model 471 Bend and Impact Tester (available from Erichsen GmbH & Co. KG) and the manufacturer's recommended test procedure, except that the coated panels are 8 x 12 cm rather than 5 x 14 cm. The results are reported as the unruptured coating length as a percent of the overall coating fold line. In general, a value of at least 75% represents good performance and a value of 90% or more represents excellent performance,

### End Fabrication

This test is a measure of fabrication ability of a coating. Standard (*e.g.,* size 206 (57 mm diameter), size 307 (83 mm diameter), or any other convenient size) can ends are formed in a press from coated steel plate. The ends are evaluated for initial failure. The ends are then soaked for 10 minutes in a copper sulfate solution containing 69 parts deionized water, 20 parts anhydrous copper sulfate, 10 parts concentrated hydrochloric acid and 1 part DOWFAX^{™} 2A1 surfactant (available from Dow Chemical Company). The percentage of the end circumference that is uncorroded is recorded.

### End Coating Porosity

This test is a measure of coating porosity after forming. Coated can ends are prepared as described above. The ends are immersed in various solutions and subjected to retort conditions as described above. An electrode is placed atop the coating and a milliamp meter is used to measure current flow from the substrate to the electrode. The results are reported in milliamps of current flow.

### Food Simulant Tests

The resistance properties of stamped can ends formed from coated plate may be evaluated by processing (retorting) them in three food simulants for 60 minutes at 121 °C and 1.05 kg/cm². The three food simulants may for example be deionized water, a 1% by weight solution of lactic acid in deionized water and a solution of 2% sodium chloride and 3% acetic acid by weight in deionized water. An additional simulant, 2% sodium chloride in deionized water, is processed for 90 minutes at 121 °C and 1.05 kg/cm². Adhesion tests are performed as described above. Blush and corrosion are rated visually.

The following examples are offered to aid in understanding the disclosed compounds, compositions and methods and are not to be construed as limiting the scope thereof. Unless otherwise indicated, all parts and percentages are by weight.

### Example 1

### Diphenol Synthesis

An 89.82 g portion (0.74 moles) of 2,6-dimethyl phenol was mixed with 25 g (0.18 moles) of d-limonene and 32 g of dried toluene. The mixture was stirred under an inert atmosphere. When homogenous, the mixture was cooled to 10°C and 1.72 g trifluoroacetic acid (1.5 wt. % based on the weight of the reactants) was added drop-by-drop. The product was stirred for 48 hours while being maintained under the inert atmosphere. A gel permeation chromatography (GPC) analysis showed that the reaction mixture contains the desired four diphenol isomers **705** through **708** shown in **Fig. 7****,** the intermediate monophenol isomers **703** and **704,** unreacted 2,6-dimethyl phenol, and no detectable unreacted d-limonene. The reaction was repeated to establish reproducibility, with a typical GPC result being 76.7 wt. % limonene bis-dimethylphenol isomers, 18.5 wt. % limonene dimethylphenol isomers, and 4.8 wt. % unreacted 2,6-dimethyl phenol.

After distillation under vacuum (dimethylphenol BP 208 to 44°C under 0.01 mm Hg; monophenol BP 95°C under 0.01 mm Hg), and purification on a chromatography column using a 75:25 wt. % mixture of hexane:diethyl ether as the eluent, a mixture of the desired limonene bis-dimethylphenol isomers was obtained as a yellow powder at a 50 wt. % yield. Nuclear magnetic resonance (NMR) analysis confirmed the structure and presence of the four diphenols **705** through **708.** The product was referred to as "LDMP".

### Example 2

### Diglycidyl Ether Synthesis

A DGE of the purified Example 1 LDMP mixture was prepared in a two-step reaction. In the first step, a mixture of 19.5 g (0.05 moles) of limonene bis-dimethylphenol isomers, 94.87 g (1.03 moles) epichlorohydrin and 5.39 g (0.03 moles) tetraethyl ammonium bromide (TEAB) was maintained with agitation at 70°C for 16 hours under an inert atmosphere. Following an addition of dichloromethane, the product was washed twice with water and dried with anhydrous sodium sulphate. After filtration, the organic solvent was removed by distillation under reduced pressure.

In the second step, the dry residue obtained in the first step was dissolved in 20 g dichloromethane. A solution of 2.72 g sodium hydroxide and 0.72 g tetraethyl ammonium bromide in 10.8 g distilled water was added using agitation at 10° C, and agitation was continued for a further 2 Hours at room temperature. The organic phase was extracted with dichloromethane, washed with deionized water, and dried with anhydrous sodium sulfate followed by removal of the solvent using distillation under reduced pressure. The residue was a viscous liquid identified by NMR as the DGE of the Example 1 limonene bis-dimethylphenol isomers ("LDMPDGE"), obtained at a 98 wt. % yield.

### Example 3

### Polyether Synthesis

A polyether was prepared by mixing 24 g of the Example 1 LDMP mixture with 31.4 g of tetramethyl bisphenol F diglycidyl ether ("TMBFDGE") while heating at 180° C with stirring. After homogenization of the mixture, 0.12 g 1,5-diazabicyclo[4.3.0]non-5-ene ("DBN") amino catalyst was added and the mixture was maintained at 180 °C until a measured epoxy value of 2100 was obtained. Next, 55.5 g ethylene glycol was added and the resulting resin solution was cooled under agitation to room temperature. The cooled resin solution had a viscosity of 372 Poise at 25 °C, a nonvolatile content ("NVC") of 51.3 % and a weight in grams needed to supply one epoxy group ("WPE") value of 2099.

### Example 4

### Polyether Synthesis

A polyether was prepared by mixing 50 g of the Example 2 LDMPDGE and 9.2 g hydroquinone while heating at 120° C with stirring. After homogenization of the mixture, 0.12 g ethyl triphenyl phosphonium iodide catalyst was added and the mixture was progressively heated to 175° C and maintained at 175-180°C until the epoxy value reached 2300. Next, 59.3 g ethylene glycol was added and the resulting resin solution was cooled under agitation to room temperature. The cooled resin solution had a viscosity of 79 Poise at 25°C, an NVC of 49.7 % and a WPE value of 2374.

### Examples 5-7

### Coating Formulations

Coating formulations were prepared by combining the Example 4 or Example 5 polyether resin with a phenolic resin and other coating system components. Phenolic Resin 1 was a resole-type resin made using a mixture of phenol and para-t-butyl phenol. Phenolic Resin 2 was a resole-type resin made using phenol. The coating formulation components were combined using the weights in grams and order shown below in Table 1 and mixed using agitation. A final viscosity adjustment was performed using SOLVESSO^{™} 100 solvent from ExxonMobil Chemical.

The coating formulations were bar-coated electrolytic tin ("ETP") substrates at a dry film weight 6-7 g/m² and cured for 10 minutes at 200-205° C. The coated substrates were fabricated into standard can ends, and found to have the performance characteristics shown below in Table 2.

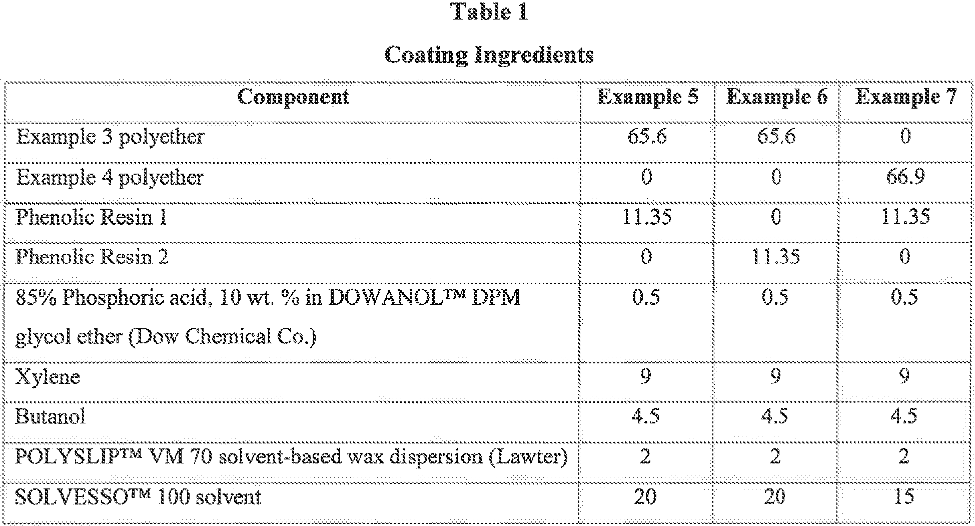

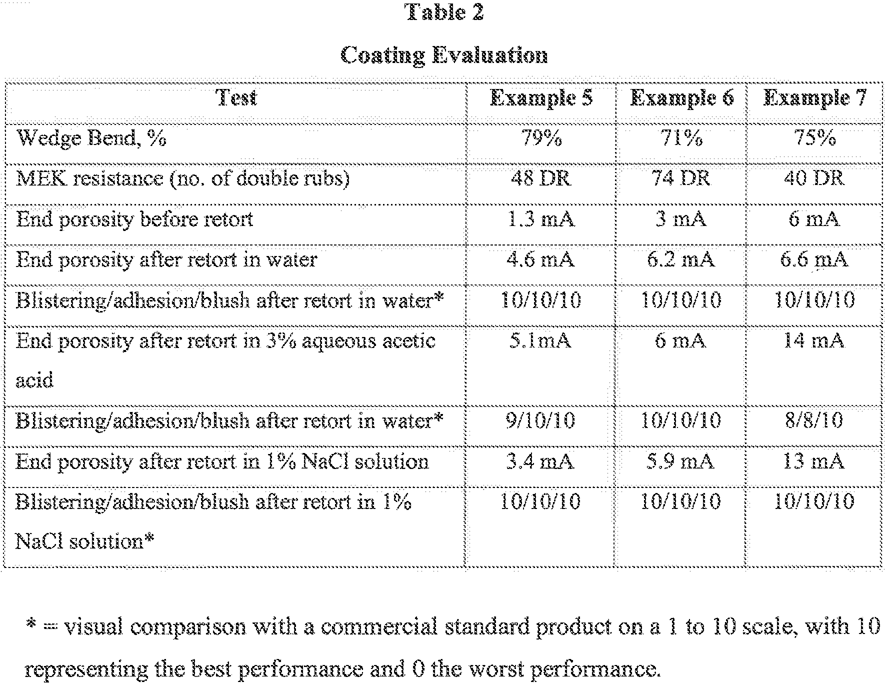

### Embodiments

Some additional non-limiting embodiments are provided below to further exemplify the present invention.
Embodiment 1: A food or beverage contact article that has been or will be formed into a food or beverage container or container component, the article comprising a substrate, preferably a metal substrate, having on at least one surface a coating formed from a coating composition comprising a polymer derived from or derivable from a polyphenol having two or more phenylene rings linked to or through an aliphatic or cycloaliphatic group or groups, wherein the polyphenol is a reaction product of a monophenol with a polyolefinic terpene.
Embodiment 2: A method for making a coated food or beverage container or container component, comprising the steps of
   a) applying to at least one surface of a substrate (*e.g.,* a metal substrate) a coating composition comprising a polymer derived from or derivable from a polyphenol having two or more phenylene rings linked to or through an aliphatic or cycloaliphatic group or groups, wherein the polyphenol is a reaction product of a monophenol with a polyolefinic terpene, and
   b) curing the coating composition to form a hardened coating.
Embodiment 3: A liquid coating composition comprising (i) a polymer derived from or derivable from a polyphenol having two or more phenylene rings linked to or through an aliphatic or cycloaliphatic group or groups, wherein the polyphenol is a reaction product of a monophenol with a polyolefinic terpene; (ii) a liquid carrier; (iii) an optional curing agent; (iv) an optional catalyst; and (v) an optional lubricant, the composition being suitable for contact with foods or beverages when thermally cured on a metal substrate.
Embodiment 4: A polyether polymer derived from or derivable from a polyphenol having two or more phenylene rings linked to or through an aliphatic or cycloaliphatic group or groups, wherein the polyphenol is a reaction product of a monophenol with a polyolefinic terpene, the polymer has a number average molecular weight (Mn) of at least about 2,000 and a glass transition temperature (Tg) of at least 30 °C, and the polymer optionally contains at least two oxirane terminal groups, optionally has a polydispersity index of about 2 to about 5, or optionally contains at least 10 wt. % aromatic segments compared to the polymer weight.
Embodiment 5: An article, method, composition or polymer of any preceding embodiment, wherein the polymer has a Tg of at least 30 °C., at least 60 °C., at least 70 °C., or at least 80 °C.
Embodiment 6: An article, method, composition or polymer of any preceding embodiment, wherein the polymer has at least about 10 wt. %, at least about 25 wt. %, at least about 40 wt. %, or at least about 50% wt. % terpene-derived segments or subunits.
Embodiment 7: An article, method, composition or polymer of any preceding embodiment, wherein the polymer has at least 10 wt. %, at least 20 wt. % or at least 40 wt. % aromatic segments or subunits.
Embodiment 8: An article, method, composition or polymer of any preceding embodiment, wherein the polymer has an Mn of at least about 2,000, at least about 3,000, or at least about 4,000.
Embodiment 9: An article, method, composition or polymer of any preceding embodiment, wherein the polymer has an Mn less than about 20,000, less than about 10,000, less than about 8,000 or less than about 6,000.
Embodiment 10: An article, method, composition or polymer of any preceding embodiment, wherein the polymer has a polydispersity index of about 2 to about 5.
Embodiment 11: An article, method, composition or polymer of any preceding embodiment, wherein the polymer is water-dispersible.
Embodiment 12: An article, method, composition or polymer of any preceding embodiment, wherein the coating composition, or a coating composition containing the polymer, contains at least 20 wt. % solids or at least 25 wt. % solids.
Embodiment 13: An article, method, composition or polymer of any preceding embodiment, wherein the coating composition, or a coating composition containing the polymer, contains no greater than 50 wt. % solids, or no greater than 40 wt. % solids.
Embodiment 14: An article, method, composition or polymer of any preceding embodiment, wherein a 50 wt. % solution containing the polymer has a viscosity less than 500 Poise, less than 300 Poise or less than 100 Poise at 25 °C.
Embodiment 15: An article, method, composition or polymer of any preceding embodiment, wherein the coating composition, or a coating composition containing the polymer, also contains a curing agent for the polymer.
Embodiment 16: An article, method, composition or polymer of any preceding embodiment, wherein the coating composition, or a coating composition containing the polymer, also contains a catalyst.
Embodiment 17: An article, method, composition or polymer of any preceding embodiment, wherein the coating composition, or a coating composition containing the polymer, also contains a lubricant.

Having thus described preferred embodiments of the disclosed compounds, compositions and methods, those of skill in the art will readily appreciate that the teachings found herein may be applied to yet other embodiments within the scope of the claims hereto attached.

## Claims

1. A food or beverage contact article that has been or will be formed into a food or beverage container or container component, the article comprising a metal substrate having on at least one surface a coating formed from a coating composition comprising a polymer derived from or derivable from a polyphenol having two or more phenylene rings linked to or through an aliphatic or cycloaliphatic group or groups, wherein the polyphenol comprises a reaction product of a monophenol with a polyolefinic terpene.

2. A method for making a coated food or beverage container or container component, comprising the steps of:
a) applying to at least one surface of a metal substrate a coating composition comprising a polymer derived from or derivable from a polyphenol having two or more phenylene rings linked to or through an aliphatic or cycloaliphatic group or groups, wherein the polyphenol comprises a reaction product of a monophenol with a polyolefinic terpene, and
b) curing the coating composition to form a hardened coating.

3. A liquid coating composition comprising (i) a polymer derived from or derivable from a polyphenol having two or more phenylene rings linked to or through an aliphatic or cycloaliphatic group or groups, wherein the polyphenol comprises a reaction product of a monophenol with a polyolefinic terpene; (ii) a liquid carrier; (iii) an optional curing agent; (iv) an optional catalyst; and (v) an optional lubricant, the composition being suitable for contact with foods or beverages when thermally cured on a metal substrate.

4. A polyether polymer derived from or derivable from a polyphenol having two or more phenylene rings linked to or through an aliphatic or cycloaliphatic group or groups, wherein the polyphenol comprises a reaction product of a monophenol with a polyolefinic terpene, and the polymer has a number average molecular weight (Mn) of at least 2,000 and a glass transition temperature (Tg) of at least 30 °C, wherein the Mn and Tg are determined in accordance with the description.

5. An article according to claim 1, method according to claim 2, composition according to claim 3 or polymer according to claim 4 wherein the polyphenol is a diphenol and a reaction product of a monophenol with a diolefinic terpene.

6. An article according to claim 1 or claim 5, method according to claim 2 or claim 5, composition according to claim 3 or claim 5 or polymer according to claim 4 or claim 5 wherein the terpene comprises a monocyclic monoterpene having the formula C₁₀H₁₆ or a bicyclic sesquiterpene having the formula C₁₅H₂₄.

7. An article according to any one of claims 1, 5 or 6, method according to any one of claims 2, 5 or 6, composition according to any one of claims 3, 5 or 6 or polymer according to any one of claims 4 to 6 wherein the terpene comprises phellandrene, menthadiene, sylvestrene, terpinene, terpinolene, cadinene or mixture thereof.

8. An article according to any one of claims 1 or 5 to 7, method according to any one of claims 2 or 5 to 7, composition according to any one of claims 3 or 5 to 7 or polymer according to any one of claims 4 to 7 wherein the terpene comprises d-limonene.

9. An article according to any one of claims 1 or 5 to 8, method according to any one of claims 2 or 5 to 8, composition according to any one of claims 3 or 5 to 8 or polymer according to any one of claims 4 to 8 wherein the monophenol has at least one substituent group located ortho to the monophenol hydroxyl group.

10. An article according to any one of claims 1 or 5 to 9, method according to any one of claims 2 or 5 to 9, composition according to any one of claims 3 or 5 to 9 or polymer according to any one of claims 4 to 9 wherein the monophenol has two substituent groups located ortho to the monophenol hydroxyl group.

11. An article according to any one of claims 1 or 5 to 10, method according to any one of claims 2 or 5 to 10, composition according to any one of claims 3 or 5 to 10 or polymer according to any one of claims 4 to 10 wherein the polyphenol comprises no more than four isomers.

12. An article according to any one of claims 1 or 5 to 11, method according to any one of claims 2 or 5 to 11, composition according to any one of claims 3 or 5 to 11 or polymer according to any one of claims 4 to 11 wherein the polymer has a number average molecular weight (Mn) of at least 3,000 Daltons (Da), wherein the Mn is determined in accordance with the description.

13. An article according to any one of claims 1 or 5 to 12, method according to any one of claims 2 or 5 to 12, composition according to any one of claims 3 or 5 to 12 or polymer according to any one of claims 4 to 12 wherein the polymer has a number average molecular weight (Mn) up to about 15,000 Daltons (Da), wherein the Mn is determined in accordance with the description.

14. An article according to any one of claims 1 or 5 to 13, method according to any one of claims 2 or 5 to 13, composition according to any one of claims 3 or 5 to 13 or polymer according to any one of claims 4 to 13 wherein the polymer includes at least 10 wt. % terpene-derived segments or subunits.

15. An article according to any one of claims 1 or 5 to 14, method according to any one of claims 2 or 5 to 14, composition according to any one of claims 3 or 5 to 14 or polymer according to any one of claims 4 to 14 wherein the polymer comprises an upgraded molecular weight polymer comprising a reaction product of the polyphenol with epichlorohydrin, a diepoxide, an acid anhydride, an unsaturated fatty acid, acrylic acid, methacrylic acid, a diacid, a diamine, a cyclic carbonate, an isocyanate, phosgene or an aldehyde.

16. An article according to any one of claims 1 or 5 to 15, method according to any one of claims 2 or 5 to 15 or composition according to any one of claims 3 or 5 to 15 wherein the coating composition comprises a curing agent, catalyst and lubricant.

17. An article according to any one of claims 1 or 5 to 16, method according to any one of claims 2 or 5 to 16 or composition according to any one of claims 3 or 5 to 16 wherein the coating composition is in liquid form.

18. An article, method or composition according to claim 17 wherein the coating composition comprises water.

19. An article according to any one of claims 1 or 5 to 16 or method according to any one of claims 2 or 5 to 16 wherein the coating composition is in powdered form.

20. An article according to any one of claims 1 or 5 to 19 wherein the article has been formed into a two-piece drawn food can, three-piece food can, food can end, drawn and ironed food or beverage can, beverage can end, easy open can end or twist-off closure lid.

## Patentansprüche

1. Lebensmittel- oder Getränkekontaktartikel, der zu einem Lebensmittel- oder Getränkebehälter oder einer Behälterkomponente ausgebildet ist oder wird, wobei der Artikel ein Metallsubstrat umfasst, das auf mindestens einer Oberfläche eine Beschichtung aufweist, die aus einer Beschichtungszusammensetzung ausgebildet ist, die ein Polymer umfasst, das aus einem Polyphenol abgeleitet ist oder davon abgeleitet werden kann, das zwei oder mehr Phenylenringe aufweist, die mit oder durch eine aliphatische oder cycloaliphatische Gruppe oder Gruppen verbunden sind, wobei das Polyphenol ein Reaktionsprodukt eines Monophenols mit einem polyolefinischen Terpen umfasst.

2. Verfahren zum Herstellen eines beschichteten Lebensmittel- oder Getränkebehälters oder einer Behälterkomponente, umfassend die Schritte:
a) Aufbringen einer Beschichtungszusammensetzung auf mindestens eine Oberfläche eines Metallsubstrats, die ein Polymer umfasst, das von einem Polyphenol abgeleitet ist oder davon abgeleitet werden kann, das zwei oder mehr Phenylenringe aufweist, die mit oder durch eine aliphatische oder cycloaliphatische Gruppe oder Gruppen verbunden sind, wobei das Polyphenol ein Reaktionsprodukt eines Monophenols mit einem polyolefinischen Terpen umfasst, und
b) Aushärten der Beschichtungszusammensetzung, um eine gehärtete Beschichtung auszubilden.

3. Flüssige Beschichtungszusammensetzung, umfassend (i) ein Polymer, das von einem Polyphenol abgeleitet ist oder davon abgeleitet werden kann, das zwei oder mehr Phenylenringe aufweist, die mit oder durch eine aliphatische oder cycloaliphatische Gruppe oder Gruppen verbunden sind, wobei das Polyphenol ein Reaktionsprodukt eines Monophenols mit einem polyolefinischen Terpen umfasst; (ii) einen flüssigen Träger; (iii) ein optionales Aushärtungsmittel; (iv) einen optionalen Katalysator; und (v) ein optionales Schmiermittel, wobei die Zusammensetzung für den Kontakt mit Lebensmitteln oder Getränken geeignet ist, wenn sie auf einem Metallsubstrat thermisch ausgehärtet wurde.

4. Polyetherpolymer, das von einem Polyphenol abgeleitet ist oder davon abgeleitet werden kann, das zwei oder mehr Phenylenringe aufweist, die mit oder durch eine aliphatische oder cycloaliphatische Gruppe oder Gruppen verbunden sind, wobei das Polyphenol ein Reaktionsprodukt eines Monophenols mit einem polyolefinischen Terpen umfasst, und wobei das Polymer ein zahlenmittleres Molekulargewicht (Mn) von mindestens 2.000 und eine Glasübergangstemperatur (Tg) von mindestens 30 °C aufweist, wobei das Mn und die Tg gemäß der Beschreibung bestimmt werden.

5. Artikel nach Anspruch 1, Verfahren nach Anspruch 2, Zusammensetzung nach Anspruch 3 oder Polymer nach Anspruch 4, wobei das Polyphenol ein Diphenol und ein Reaktionsprodukt eines Monophenols mit einem diolefinischen Terpen ist.

6. Artikel nach Anspruch 1 oder Anspruch 5, Verfahren nach Anspruch 2 oder Anspruch 5, Zusammensetzung nach Anspruch 3 oder Anspruch 5 oder Polymer nach Anspruch 4 oder Anspruch 5, wobei das Terpen ein monocyclisches Monoterpen, das die Formel C₁₀H₁₆ aufweist, oder ein bicyclisches Sesquiterpen umfasst, das die Formel C₁₅H₂₄ aufweist.

7. Artikel nach einem der Ansprüche 1, 5 oder 6, Verfahren nach einem der Ansprüche 2, 5 oder 6, Zusammensetzung nach einem der Ansprüche 3, 5 oder 6 oder Polymer nach einem der Ansprüche 4 bis 6, wobei das Terpen Phellandren, Menthadien, Sylvestren, Terpinen, Terpinolen, Cadinen oder Mischungen davon umfasst.

8. Artikel nach einem der Ansprüche 1 oder 5 bis 7, Verfahren nach einem der Ansprüche 2 oder 5 bis 7, Zusammensetzung nach einem der Ansprüche 3 oder 5 bis 7 oder Polymer nach einem der Ansprüche 4 bis 7, wobei das Terpen D-Limonen umfasst.

9. Artikel nach einem der Ansprüche 1 oder 5 bis 8, Verfahren nach einem der Ansprüche 2 oder 5 bis 8, Zusammensetzung nach einem der Ansprüche 3 oder 5 bis 8 oder Polymer nach einem der Ansprüche 4 bis 8, wobei das Monophenol mindestens eine Substituentengruppe aufweist, die sich in ortho-Stellung zu der Hydroxylgruppe des Monophenols befindet.

10. Artikel nach einem der Ansprüche 1 oder 5 bis 9, Verfahren nach einem der Ansprüche 2 oder 5 bis 9, Zusammensetzung nach einem der Ansprüche 3 oder 5 bis 9 oder Polymer nach einem der Ansprüche 4 bis 9, wobei das Monophenol zwei Substituentengruppen aufweist, die sich in ortho-Stellung zu der Hydroxylgruppe des Monophenols befinden.

11. Artikel nach einem der Ansprüche 1 oder 5 bis 10, Verfahren nach einem der Ansprüche 2 oder 5 bis 10, Zusammensetzung nach einem der Ansprüche 3 oder 5 bis 10 oder Polymer nach einem der Ansprüche 4 bis 10, wobei das Polyphenol nicht mehr als vier Isomere umfasst.

12. Artikel nach einem der Ansprüche 1 oder 5 bis 11, Verfahren nach einem der Ansprüche 2 oder 5 bis 11, Zusammensetzung nach einem der Ansprüche 3 oder 5 bis 11 oder Polymer nach einem der Ansprüche 4 bis 11, wobei das Polymer ein zahlenmittleres Molekulargewicht (Mn) von mindestens 3.000 Dalton (Da) aufweist, wobei das Mn gemäß der Beschreibung bestimmt wird.

13. Artikel nach einem der Ansprüche 1 oder 5 bis 12, Verfahren nach einem der Ansprüche 2 oder 5 bis 12, Zusammensetzung nach einem der Ansprüche 3 oder 5 bis 12 oder Polymer nach einem der Ansprüche 4 bis 12, wobei das Polymer ein zahlenmittleres Molekulargewicht (Mn) bis etwa 15.000 Dalton (Da) aufweist, wobei das Mn gemäß der Beschreibung bestimmt wird.

14. Artikel nach einem der Ansprüche 1 oder 5 bis 13, Verfahren nach einem der Ansprüche 2 oder 5 bis 13, Zusammensetzung nach einem der Ansprüche 3 oder 5 bis 13 oder Polymer nach einem der Ansprüche 4 bis 13, wobei das Polymer mindestens 10 Gew.-% von Terpen abgeleitete Segmente oder Untereinheiten einschließt.

15. Artikel nach einem der Ansprüche 1 oder 5 bis 14, Verfahren nach einem der Ansprüche 2 oder 5 bis 14, Zusammensetzung nach einem der Ansprüche 3 oder 5 bis 14 oder Polymer nach einem der Ansprüche 4 bis 14, wobei das Polymer ein Polymer mit angehobenem Molekulargewicht, umfassend ein Reaktionsprodukt des Polyphenols mit Epichlorhydrin, ein Diepoxid, ein Säureanhydrid, eine ungesättigte Fettsäure, Acrylsäure, Methacrylsäure, eine Disäure, ein Diamin, ein cyclisches Carbonat, ein Isocyanat, Phosgen oder ein Aldehyd umfasst.

16. Artikel nach einem der Ansprüche 1 oder 5 bis 15, Verfahren nach einem der Ansprüche 2 oder 5 bis 15 oder Zusammensetzung nach einem der Ansprüche 3 oder 5 bis 15, wobei die Beschichtungszusammensetzung ein Aushärtungsmittel, einen Katalysator und ein Schmiermittel umfasst.

17. Artikel nach einem der Ansprüche 1 oder 5 bis 16, Verfahren nach einem der Ansprüche 2 oder 5 bis 16 oder Zusammensetzung nach einem der Ansprüche 3 oder 5 bis 16, wobei die Beschichtungszusammensetzung in flüssiger Form vorliegt.

18. Artikel, Verfahren oder Zusammensetzung nach Anspruch 17, wobei die Beschichtungszusammensetzung Wasser umfasst.

19. Artikel nach einem der Ansprüche 1 oder 5 bis 16 oder Verfahren nach einem der Ansprüche 2 oder 5 bis 16, wobei die Beschichtungszusammensetzung in Pulverform vorliegt.

20. Artikel nach einem der Ansprüche 1 oder 5 bis 19, wobei der Artikel zu einer zweiteiligen gezogenen Lebensmitteldose, dreiteiligen Lebensmitteldose, einem Lebensmitteldosenende, einer gezogenen und abgestreckten Lebensmittel- oder Getränkedose, einem Getränkedosenende, einem leicht zu öffnenden Dosenende oder einem Drehverschlussdeckel ausgebildet worden ist.

## Revendications

1. Article de contact pour aliments ou boissons qui a été ou sera formé en un récipient ou composant de récipient pour aliments ou boissons, l'article comprenant un substrat métallique ayant sur au moins une surface un revêtement formé à partir d'une composition de revêtement comprenant un polymère dérivé ou dérivable d'un polyphénol ayant deux cycles phénylène ou plus liés à ou par l'intermédiaire d'un groupe ou plusieurs groupes aliphatique(s) ou cycloaliphatique(s), dans lequel le polyphénol comprend un produit de réaction d'un monophénol avec un terpène polyoléfinique.

2. Procédé de fabrication d'un récipient ou composant de récipient pour aliments ou boissons revêtu, comprenant les étapes consistant à :
a) appliquer sur au moins une surface d'un substrat métallique une composition de revêtement comprenant un polymère dérivé ou dérivable d'un polyphénol ayant deux cycles phénylène ou plus liés à ou par l'intermédiaire d'un groupe ou plusieurs groupes aliphatique(s) ou cycloaliphatique(s), dans lequel le polyphénol comprend un produit de réaction d'un monophénol avec un terpène polyoléfinique, et
b) durcir la composition de revêtement pour former un revêtement durci.

3. Composition de revêtement liquide comprenant (i) un polymère dérivé ou dérivable d'un polyphénol ayant deux cycles phénylène ou plus liés à ou par l'intermédiaire d'un groupe ou plusieurs groupes aliphatique(s) ou cycloaliphatique(s), dans laquelle le polyphénol comprend un produit de réaction d'un monophénol avec un terpène polyoléfinique ; (ii) un véhicule liquide ; (iii) un agent de durcissement facultatif ; (iv) un catalyseur facultatif ; et (v) un lubrifiant facultatif, la composition étant appropriée pour un contact avec des aliments ou des boissons lorsqu'elle est durcie thermiquement sur un substrat métallique.

4. Polymère polyéther dérivé ou dérivable d'un polyphénol ayant deux cycles phénylène ou plus liés à ou par l'intermédiaire d'un groupe ou plusieurs groupes aliphatique(s) ou cycloaliphatique(s), dans lequel le polyphénol comprend un produit de réaction d'un monophénol avec un terpène polyoléfinique, et le polymère a une masse moléculaire moyenne en nombre (Mn) d'au moins 2000 et une température de transition vitreuse (Tg) d'au moins 30 °C, dans lequel les Mn et Tg sont déterminés conformément à la description.

5. Article selon la revendication 1, procédé selon la revendication 2, composition selon la revendication 3 ou polymère selon la revendication 4 dans lequel le polyphénol est un diphénol et un produit de réaction d'un monophénol avec un terpène dioléfinique.

6. Article selon la revendication 1 ou la revendication 5, procédé selon la revendication 2 ou la revendication 5, composition selon la revendication 3 ou la revendication 5 ou polymère selon la revendication 4 ou la revendication 5 dans lequel le terpène comprend un monoterpène monocyclique ayant la formule C₁₀H₁₆ ou un sesquiterpène bicyclique ayant la formule C₁₅H₂₄.

7. Article selon l'une quelconque des revendications 1, 5 ou 6, procédé selon l'une quelconque des revendications 2, 5 ou 6, composition selon l'une quelconque des revendications 3, 5 ou 6 ou polymère selon l'une quelconque des revendications 4 à 6 dans lequel le terpène comprend du phellandrène, menthadiène, sylvestrène, terpinène, terpinolène, cadinène ou un mélange de ceux-ci.

8. Article selon l'une quelconque des revendications 1 ou 5 à 7, procédé selon l'une quelconque des revendications 2 ou 5 à 7, composition selon l'une quelconque des revendications 3 ou 5 à 7 ou polymère selon l'une quelconque des revendications 4 à 7 dans lequel le terpène comprend du d-limonène.

9. Article selon l'une quelconque des revendications 1 ou 5 à 8, procédé selon l'une quelconque des revendications 2 ou 5 à 8, composition selon l'une quelconque des revendications 3 ou 5 à 8 ou polymère selon l'une quelconque des revendications 4 à 8 dans lequel le monophénol a au moins un groupe substituant situé en ortho par rapport au groupe hydroxyle du monophénol.

10. Article selon l'une quelconque des revendications 1 ou 5 à 9, procédé selon l'une quelconque des revendications 2 ou 5 à 9, composition selon l'une quelconque des revendications 3 ou 5 à 9 ou polymère selon l'une quelconque des revendications 4 à 9 dans lequel le monophénol a deux groupes substituants situés en ortho par rapport au groupe hydroxyle du monophénol.

11. Article selon l'une quelconque des revendications 1 ou 5 à 10, procédé selon l'une quelconque des revendications 2 ou 5 à 10, composition selon l'une quelconque des revendications 3 ou 5 à 10 ou polymère selon l'une quelconque des revendications 4 à 10 dans lequel le polyphénol ne comprend pas plus de quatre isomères.

12. Article selon l'une quelconque des revendications 1 ou 5 à 11, procédé selon l'une quelconque des revendications 2 ou 5 à 11, composition selon l'une quelconque des revendications 3 ou 5 à 11 ou polymère selon l'une quelconque des revendications 4 à 11 dans lequel le polymère a une masse moléculaire moyenne en nombre (Mn) d'au moins 3000 Daltons (Da), dans lequel la Mn est déterminée conformément à la description.

13. Article selon l'une quelconque des revendications 1 ou 5 à 12, procédé selon l'une quelconque des revendications 2 ou 5 à 12, composition selon l'une quelconque des revendications 3 ou 5 à 12 ou polymère selon l'une quelconque des revendications 4 à 12 dans lequel le polymère a une masse moléculaire moyenne en nombre (Mn) jusqu'à environ 15 000 Daltons (Da), dans lequel la Mn est déterminée conformément à la description.

14. Article selon l'une quelconque des revendications 1 ou 5 à 13, procédé selon l'une quelconque des revendications 2 ou 5 à 13, composition selon l'une quelconque des revendications 3 ou 5 à 13 ou polymère selon l'une quelconque des revendications 4 à 13 dans lequel le polymère inclut au moins 10 % en poids de segments ou sous-unités dérivés de terpène.

15. Article selon l'une quelconque des revendications 1 ou 5 à 14, procédé selon l'une quelconque des revendications 2 ou 5 à 14, composition selon l'une quelconque des revendications 3 ou 5 à 14 ou polymère selon l'une quelconque des revendications 4 à 14 dans lequel le polymère comprend un polymère de masse moléculaire élevée comprenant un produit de réaction du polyphénol avec de l'épichlorhydrine, un diépoxyde, un anhydride d'acide, un acide gras insaturé, de l'acide acrylique, de l'acide méthacrylique, un diacide, une diamine, un carbonate cyclique, un isocyanate, du phosgène ou un aldéhyde.

16. Article selon l'une quelconque des revendications 1 ou 5 à 15, procédé selon l'une quelconque des revendications 2 ou 5 à 15 ou composition selon l'une quelconque des revendications 3 ou 5 à 15 dans lequel la composition de revêtement comprend un agent de durcissement, un catalyseur et un lubrifiant.

17. Article selon l'une quelconque des revendications 1 ou 5 à 16, procédé selon l'une quelconque des revendications 2 ou 5 à 16 ou composition selon l'une quelconque des revendications 3 ou 5 à 16 dans lequel la composition de revêtement est sous forme liquide.

18. Article, procédé ou composition selon la revendication 17 dans lequel la composition de revêtement comprend de l'eau.

19. Article selon l'une quelconque des revendications 1 ou 5 à 16 ou procédé selon l'une quelconque des revendications 2 ou 5 à 16 dans lequel la composition de revêtement est sous forme de poudre.

20. Article selon l'une quelconque des revendications 1 ou 5 à 19 dans lequel l'article a été formé en une boîte pour aliments emboutie en deux pièces, une boîte pour aliments en trois pièces, une extrémité de boîte pour aliments, une boîte pour aliments ou boissons emboutie et étirée, une extrémité de boîte pour boissons, une extrémité de boîte à ouverture facile ou un couvercle de fermeture à dévissage.
